# EUROPÄISCHE PATENTSCHRIFT

(11) **EP 1 243 525 B1**
(45) Veröffentlichungstag und Bekanntmachung des Hinweises auf die Patenterteilung: **30.03.2005**
(21) Anmeldenummer: 01250343.9
(22) Anmeldetag: 27.09.2001
(51) Int. Cl.: B65D 81/38, F25D 3/06, A47J 41/02

(54) **Transportbehätnis für Langzeittransporte mit hochisolierenden Komponenten**
Container for long-term transport comprising highly insulated components
Conteneur pour transport de longue durée avec des éléments fortement isolants

(30) Priorität: 19.03.2001 DE 10113183; 25.09.2001 DE 10148586; 27.09.2001 DE 10148587
(43) Veröffentlichungstag der Anmeldung: 25.09.2002
(73) Patentinhaber: Arosta Vaku Tec Deutschland GmbH, 15859 Storkow (DE)
(72) Erfinder: Zucker, Hans, 12621 Berlin (DE); Sommer, Werner, 12621 Berlin (DE); Worf, Matthias, 15907 Lübben/Spreewald (DE)
(74) Vertreter: Heitsch, Wolfgang

(56) Entgegenhaltungen:
- EP-A- 0 936 428
- EP-A- 1 006 058
- WO-A-02/28741
- WO-A-87/01360
- DE-A- 4 438 141
- DE-A- 19 725 818
- DE-U- 8 627 074
- DE-U- 29 611 084
- US-A- 2 080 326
- US-A- 3 190 412
- US-A- 5 417 327

## Beschreibung

Die Erfindung betrifft ein wechselbar temperierfähiges Behältnis mit Vakuumisolierung, Energiespeichern, einem oder mehreren Lagerräumen, verschiedenen hochisolierenden Komponenten und einem Temperaturmess-, -speicher- und Datenübertragungssystem.

Es sind verschiedene, meist doppelwandige Behältnisse bekannt für die Lagerung unterschiedlicher Medien bzw. Materialien, für die Speicherung tiefsiedender verflüssigter Gase, aber auch als kombinierte Transport- und Lagerbehälter zum zeitweisen Speichern eines vorbestimmten Temperaturbereichs zur Heiß- bzw. Warmhaltung oder Kalt- bzw. Kühlhaltung. Diese Behälter weisen sehr unterschiedliche isolierende Komponenten wie zum Beispiel Polyurethan, Styropor, Korkplatten, evakuierte Zwischenräume und/oder Vakuumisolationspaneele als Ummantelung auf. So sind Behälter bekannt für den Frischfisch-Transport, für Nahrungsmittel, lebende Organe, Mikroorganismen und andere Materialien, die in einem bestimmten Temperaturbereich gelagert und/oder transportiert werden müssen. Bei der Lagerung derartiger Materialien gibt es im allgemeinen keine Probleme, diese in einem bestimmten Temperaturbereich aufzubewahren, da bei stationären Behältnissen ein Ausgleich auftretender Temperaturdifferenzen vor Ort leicht möglich ist. Anders sieht es mit Transportbehältnissen aus. So kann beispielsweise bei einem Transport von biologischem Material über weite Entfernungen - z.B. einem interkontinentalen Flug - die Einhaltung eines konstanten Temperaturbereichs regelmäßig nicht gewährleistet werden. Unerwünschte Temperaturänderungen sind die Folge, und transportiertes Material ist oftmals verdorben.

In der EP 209 003 A2 wird ein doppelwandiger isolierter Behälter für die Speicherung tiefsiedender verflüssigter Gase beschrieben. Der Behälter weist einen Innen- und einen Außenbehälter auf, wobei der Innenbehälter durch ein sogenanntes Halsrohr mit der Öffnung des Außenbehälters verbunden ist. Der zwischen Innen- und Außenbehälter vorhandene Raum ist ausgefüllt mit einer Isolierung, die zumeist aus Schaumstoff besteht

Ein ähnlicher Behälter wird in der DE-OS 29 26 646 beschrieben, bei dem der innere Behälter mit einer Vakuumdämmung umgeben ist, wobei die Vakuumdämmung in einem gesonderten, das Innenbehältnis umschließenden, aber das Außenbehältnis nicht berührenden Behältnis angeordnet ist.

Die in den beiden genannten Schriften beschriebenen Behältnisse weisen als Übergang vom Außenbehältnis zum Innenbehältnis einen spitzwinklig langgezogenen, ähnlich dem aus der EP 0 936 428 A2 bekannten Bereich auf, um möglichst Wärmebrücken und damit einhergehende Temperaturverluste so gering wie möglich zu halten. Dadurch nimmt - wie auch aus den Figuren der genannten Schriften ersichtlich - der obere zur Öffnung hin gestreckte Teil der Isolierung den größten Teil des Innenraums ein. Dementsprechend klein kann dann nur das für die Lagerung bestimmter Materialien vorgesehene Innenbehältnis gestaltet werden. Herkömmliche Behältnisse haben demzufolge ein sehr ungünstiges Verhältnis von innerem Lagerraum zu dem von der Außenhaut umgebenen Raum.

Mit der US 5,417,327 wird ein isoliertes modulares Gefäß zum Transport von Getränkebehältern offenbart, das mit einem Energiespeicher ausgestattet ist. Mehrere Gefäße können übereinander gestapelt und zu einem gemeinsamen Lagerraum verbunden werden. Das Gefäß ist mit einem aufschraubbaren Deckel und einem ebensolchen Boden verschließbar. Nachteilig an dieser Lösung ist, dass die Innenwandung und die Außenwandung über lange Wärmebrücken miteinander verbunden sind, so dass ein relativ guter Wärmeübergang von innen nach außen und damit eine schlechte Isolationswirkung besteht. Um den Energiespeicher auf eine Temperatur einzustellen, muss das gesamte Gefäß dieser Temperatur ausgesetzt werden.

In der DE 86 27 074 U wird ein Thermoisolierbeutel zum Vakuum-Verpacken von Mikropulver zur Isolation von Kühlcontainem beschrieben, die von Platten aus Pappe, Papier, Kunststoff oder Metall umgeben sind und eine weitere Außenhülle besitzen. Die beschriebene Lösung eignet sich nur zur Isolation großflächiger, ebener Gehäusewände. Kompliziertere Formen lassen sich auf diese Weise nicht realisieren. Bei einem Umhüllen dieses Thermoisolierbeutels mit Kunststoffschaum entstehen in dem Thermoisolierbeutel mit Luft gefüllte Falten, die nicht vom Kunststoffschaum ausgefüllt werden. Dadurch wird die Isolationswirkung herabgesetzt.

Bekannt ist auch ein dickwandiges hülsenförmiges Behältnis aus der DE 44 38 141 A1 welches über eine Schraubvorrichtung mit einem weiteren hülsenförmigen Behältnis übereinander stapelbar zu verschrauben ist. Das Behältnis ist mit einem sogenannten Temperierakku", welcher in den Deckel und in den Boden als einflanschbares und austauschbares Plattenelement eingelegt ist, ausgestattet. Der Deckel und der Boden besagten Behältnisses sind in dieses einzuschrauben. Alternativ wird das Behältnis gemäß dieser Erfindung im oberen Bereich von einer rundum auf dem Gefäßbehälterrand aufgedrückten Deckelverschließvorrichtung, in welche ein Deckel mit Temperierakku einlegbar ist, umgeben. Die Deckelverschließvorrichtung dient dazu, einen Temperierakku auszutauschen, ohne dabei das Behältnis zu öffnen. So wird beim Tausch von Akkus die Innentemperatur des Behältnisses nicht beeinträchtigt. Das Behältnis gemäß dieser Erfindung dient sowohl der Kühlhaltung als auch der Heiß- bzw. Warmhaltung von im Inneren des Behältnisses befindlichen Stoffen.

Ebenfalls einen Kühlakku in einem Deckel und/oder in einem Gehäuseunterteil weisen ein Behälter nach EP 0 153 975 A1 und DE 296 084 U1 auf, wobei der Kühlakku oder ein Kühlmedium wahlweise austauschbar oder fest eingeschweißt sind.

Aus der EP 178 337 A1 ist ein Container für die Lagerung von tiefgefrorenem Material bekannt. Der Container besteht aus einem äußeren und einem inneren Gefäß, wobei letzteres über eine Bodenöffnung in das äußere Gefäß einbringbar ist und das äußere Gefäß und das innere Gefäß mit je einem Fußteil hermetisch verschlossen werden. Im Zwischenraum zwischen äußerem und innerem Gefäß wird in konventioneller Weise Vakuum als Isolierung erzeugt.

Aus der EP 1 006 058 A1 ist ein Behälter mit kompakter Wandung aus wärmeisolierendem Material bekannt, bei dem die Oberfläche der verschließenden Randbereiche zwischen Deckel und Behälterkörper zur Verhinderung des Ausströmens von Wärme mit einer Dichtmasse versehen wird.

Ein weites Spektrum innerhalb des Standes der Technik nehmen flaschenförmige kleinere Behältnisse mit Vakuumisolierung ein. Das Innenbehältnis ist im Außenbehältnis freihängend am oberen Rand des Außenbehältnisses betestigt. (GB 2 129 117 A, DE 31 45 916 A1, EP 0 147 165 A2 und EP 0 880 929 A2). Ebenfalls freihängend sind die inneren flaschenförmigen Behältnisse am oberen Rand des Außenbehältnisses befestigt, aber mit einer Unterstützung versehen, wie beispielsweise in der EP-0 109 262 A1 beschrieben. Derartige flaschenförmige Behältnisse sind nur sehr bedingt und dann auch nur für die Aufbewahrung von kleinsten Mengen über wenige Stunden bei annähernd konstanter Temperatur einsetzbar. Durch die freihängende Befestigung des Innenbehältnisses am Rand des Außenbehältnisses ist die Füllung der Lagerräume, selbst bei größerer Dimensionierung der Behältnisse, mit einem größeren Lagergewicht nicht möglich.

Aus der DE 40 29 405 A 1 ist ein im Innenraum evakuierter Formkörper zur Wärmedämmung bekannt, dessen Umhüllung aus einer gas- und wasserdichten und metallfreien Folie besteht. Durch den Verzicht auf metallische Bestandteile in der Folie vermeidet man unerwünschte Wärmebrücken, insbesondere in den Randbereichen des wärmedämmenden Formkörpers. Die in dieser Schrift geforderte Gas- und Wasserdampfdichtigkeit der Folien ist jedoch nur gewährleistet, wenn die Kunststofffolien einen speziellen Schichtaufbau aufweisen. Diese Folien sind jedoch aufwendig herzustellen und damit relativ teuer. Die Dicke der Folien liegt im Bereich von bis zu 1 mm. Zum Teil muss das Material vor dem Einsatz als Umhüllung für Vakuumisolationspaneele durch ein Tiefziehverfahren in die entsprechende Form gebracht werden. Derartige Vakuumisolationspaneele dienen vielfach auch der Isolation von wechselbar temperierfähigen Behältnissen. Vakuumisolationspaneele mit Umhüllungen aus Metall oder metallhaltigen, zumeist aluminiumhaltigen oder metallkaschierten Folien sind ebenfalls bekannt. Gebräuchliche Aluminiumverbundfolien besitzen aufgrund der Metallschicht eine für die erforderliche Lebensdauer ausreichende Diffusionsdichtigkeit für Wasser und Luft. Bei diesen Vakuumisolationspaneelen sind die kritischen Zonen die Randbereiche, weil dort die aneinanderstoßenden Metallschichten am Rand der Vakuumisolationspaneele Wärmebrücken verursachen. In die Vakuumisolationspaneele wird poröses Isolationsmaterial zwischen die Edelstahlbleche eingelegt. Boden- und Deckbleche werden in geeigneter Weise am Rand miteinander verschweißt (DE 42 14 002 A1). Eine externe Evakuierung erfolgt über eine Öffnung bzw. ein Evakuierungsröhrchen, das sich im Randverbund oder in der Mitte einer der Abdeckbleche befindet. Aus der DE 197 25 818 A 1 ist eine Wärmedämmung mit Matten aus Folienmaterial und Vakuum bekannt. Der Schichtaufbau wird in dieser Schrift als Mehrschichtisolierung beschrieben, wobei wechselnde Schichten aus Aluminiumfolie und Glasfasergewebe eine Matte bilden. Diese Matten sind mit schlecht wärmeleitenden Fixierelementen auf einem Unterbau aus Kupferblech befestigt. Es wird beschrieben, dass abwechselnd aus Wärmestrahlen, reflektierendem Material und schlecht wärmeleitendem Material bestehende Schichten in den Matten getrennte Lagen bilden. Als schlecht wärmeleitende Materialen werden in dieser Schrift Beschichtungen aus Folie, Faserschicht, Gewebe, insbesondere Glasfasergewebe, erwähnt. Bei Vakuumisolationen ist es üblich, pulverförmige oder körnige, druckfeste Isoliermaterialen als Füllstoff zu verwenden. Einerseits um die Wärmeverluste durch Strahlung und Konvektion zu reduzieren, andererseits um die Wände gegen den Umgebungsdruck auf Distanz zu halten bzw. um Kräfte von einer Wand auf die gegenüberliegende Wand zu übertragen. Auch sind stützende Strukturen sehr unterschiedlicher Konstruktion und Anwendung wie sie beispielsweise in den Schriften US 2, 080, 326, WO 87/01360 und DE 197 25 818 A1 beschrieben werden, bekannt. Diese stützenden Strukturen halten die doppelten Wandungen auf Distanz.

Die besonderen Probleme bei den bekannten Ausführungsformen konzentrieren sich auf die Einfüll- und Entnahme- bzw. Öffnungsbereiche sowie die Bodenbereiche bei der Reduzierung oder Vermeidung von Wärmebrücken. Ebenso problematisch sind die Übergangsbereiche an den Verbindungen von Innen- und Außenwand bzw. Innen- und Außenbehälter. Alle beschriebenen Behälter sind trotz teilweiser Verwendung von guten Isolationsmaterialien wie Polyurethan, Styropor, Korkplatten und dergleichen aber auch Vakuum nicht geeignet, Stoffe, die beispielsweise für die Aufbewahrung von menschlicher Haut bei Temperaturen in einem Bereich von etwa -80 °C zu lagern sind, über einen Zeitraum > 36 - 40 Stunden aufzubewahren. Darüber hinaus sind alle Behältnisse relativ schwer und dickwandig und damit materialintensiv hergestellt. In der Praxis angebotene Transportbehälter mit Vakuumisolierung weisen z.B. 2 mm starke Innen- und Außenwände auf und erreichen Standzeiten von nur 36 Stunden bei einer gewünschten Lagertemperatur im Bereich um -80 °C. Weitere Nachteile ergeben sich durch die dickeren Wandungen in einem stärkeren Schweißverzug, in Eigenspannungen und Oberflächendellen. Die größeren Materialstärken wirken negativ auf das Behältergewicht, sind besonders nachteilig bei Lufttransporten und haben wegen des höheren Wärmeflusses negative Auswirkungen auf die Standzeiten. Im Verhältnis zum Lagervolumen haben alle bekannten Behältnisse kleine Einfüll- bzw. Entnahmeöffnungen.

Die Aufgabe der Erfindung besteht darin, die Nachteile der bekannten Behälter zu beseitigen, dass Standzeiten für Behälter, beispielsweise für den Transport und die Aufbewahrung von tiefkalten biologischen Proben, Organen, Kulturen und dergleichen in einem Temperaturbereich von -90 °C bis -75 °C von > 50 Stunden, vorzugsweise > 100 Stunden, erzielbar sind. Mit der erfindungsgemäß vorzuschlagenden Lösung soll das Nachladen von Energiespeichem erst nach > 100 Stunden erforderlich werden. Ferner ist es Aufgabe der Erfindung, das wechselbar temperierfähige Behältnis leichter zu gestalten, seine Herstellung zu vereinfachen, ein günstiges Verhältnis zwischen innerem Lagerraum und dem von der Außenhaut umgebenen Raum herzustellen und es im Baukastensystem auch stapelbar zu montieren, um somit Material und Kosten zu sparen. Für die besonders kritischen Bereiche des wechselbar temperierfähigen Behältnisses sind spezielle Isolierelemente vorzuschlagen. Die Verwendung von flüssigem Stickstoffsoll generell ausgeschlossen werden.

Die Lösung dieser Aufgabe erfolgt mit den Merkmalen der Ansprüche 1 und 2 vorteilhafte Ausgestaltungen beschreiben die Unteransprüche. Mit einer neuartigen vorteilhaften Kombination von unterschiedlichen Isolationskomponenten wird ein wechselbar temperierfähiges Behältnis mit hocheffektiven Isolationseigenschaften vorgeschlagen, bei welchem die kritischen Zonen, insbesondere Übergangsbereiche von Innen- und Außenwandungen, Öffnungsbereiche und Übergangsbereiche unterschiedlicher Werkstoffe vor einfallender Wärme erfindungsgemäß geschützt und isoliert werden und einbringbare und nachladbare Latentenergie-, sensorische Energie- und/oder chemische Energiespeicher Standzeiten erfindungsgemäßen Behälters über einen Zeitraum von ≥ 140 Stunden gewährleisten.
Die erfindungsgemäße Kombination einzelner Isolationskomponenten beruht auf der aufeinander abgestimmten Verwendung von
- Hochvakuum-Superisolation in Ummantelungen mit Abstandhalter und metallbedampfter Reflexionsfolie mit einer Wärmeleitzahl von cirka 0,1 mW/mK,
- formstabiler Schaumstoff-Isolation mit Randverstärkung und einer Wärmeleitzahl von cirka 10 mW/mK,
- Hochvakuum-Superisolation in Hohlkörpern mit Stützstruktur mit einer Wärmeleitzahl von cirka 0,1 mW/mK,
- Reflexionsmaterialien zwischen Innen- und Außenwand der Hochvakuum-Superisolation,
- Vakuum- und Hochvakuum-Isolierkomponenten aus Kunststoff, Glas, Keramik und/oder Metall mit in der Evakuierungszone angeordneten Stützstrukturen und mit Abstandhalter und metallbedampfter Reflexionsfolie zum Einbringen in formstabile Schaumstoffisolationen,
- der Anwendung an sich bekannter Getterung des evakuierten Innenraums mit Abgabe des Gettermaterials aus Vorrichtungen,
- der Anwendung materialschwacher bombierter Behälterwandungen sowie
- materialschwacher und langgestreckter, in mindestens zwei Freiheitsgraden bewegbarer Übergängen von einer äußeren zu einer inneren Ummantelung zur Verminderung bzw. Verlängerung des Wärmeflusses und Senkung des Behältergewichts und
- der alternativen Verwendung von Folien-Vakuumisolationen (Vakuum-Isolier-Paneele) als hocheffektive Wärmeschilde mit einer Wärmeleitzahl von cirka 4 mW/mK.

Die alternativ einzusetzende Folien-Vakuumisolation als hocheffektiver Wärmeschild ist zumeist pulver- oder füllstoffgestützt und von scheiben-, platten-, ring-, topf-, zylinder-, hohlzylinder- oder kreissegmentförmiger Gestalt und ist vorzugsweise in Wandungselementen und Konstruktionen fest eingeschäumt angeordnet, wobei die Folien-Vakuumisolation in Bereichen potentieller Wärmebrücken hinter- bzw. übereinander versetzt angeordnet ist. Die Hochvakuum-Superisolation besteht aus einem doppelwandigen System mit aus etwa parallel zueinander verlaufendem Außenmantel und Innenmantel gebildetem geschlossenen Hohlkörper mit bis zum Hochvakuumbereich evakuierter Innenatmosphäre. Der Innenmantel ist zur Vermeidung von Wärmeverlusten an seinen beiden Enden umlaufend dünner ausgebildet und weist langgezogene und ein- oder mehrfach gebogene Enden auf, die mit dem Außenmantel vakuumdicht verschweißt sind. Diese Enden weisen mindestens zwei Freiheitsgrade auf und fungieren somit als Feder- bzw. Dehnungselement. Gemäß der Erfindung haben die Enden des Innen- und/oder des Außenmantels jede beliebige den Wärmeweg verlängernde Form. In den Innen- und/oder Außenmantel eingeformte Sicken führen zur Stabilisierung gegen Implosion und damit zur Verminderung der Wandstärken und gewährleisten einen weiteren elastischen Ausgleich zwischen Innen- und Außenmantel. Die formstabile Schaumstoff-Isolation ist in schalenförmige Umhüllungen eingebracht, die beispielsweise aus Edelstahlblech oder Kunststoff geformt sind, und dient der Arretierung und dem Schutz von eingelegten Isolierkomponenten verschiedenster Form, fernerhin der mechanischen Stabilität umhüllender, verbindender oder verschließender Konstruktionen sowie der Vermeidung bzw. Verringerung von Wärmebrücken. Die Hochvakuum-Superisolation in Hohlkörpern mit Stützstrukturen in umhüllenden, verbindenden oder verschließenden Konstruktionen besteht aus einer Ummantelung mit Innenraum, in dem Stützstrukturen angeordnet sind. Die Stützstrukturen füllen den Innenraum des Hohlkörpers partiell oder fast vollständig in einer oder mehreren Lagen nebeneinander und/oder übereinander aus. Die Stützstrukturen bestehen einerseits aus kreis- oder polygonförmigen Zellen, die versetzt übereinander und/oder nebeneinander in mehreren Lagen so angeordnet sind, dass die jeweils übereinander angeordneten Zellenwände sich nur punktförmig berühren. Die Stützstruktur aus kreis- oder polygonförmigen Zellen ist ein vertikal zellenförmig angeordnetes Material, das beispielsweise aus beschichteten Papier-, Glas-, Keramik- oder Kunststoffstrukturen besteht. Andererseits sind die Stützstrukturen von zu Ringen geformter, etwa schlauchförmiger Gestalt (Torus) oder als Vollring ausgebildet und sind im Innenraum des Hohlkörpers ringförmig, vorzugsweise in mehreren Ringen nebeneinander angeordnet. Die schlauchförmigen oder als Vollring ausgebildeten Stützstrukturen bestehen aus glasfaserverstärktem Kunststoff

Gemäß der Erfindung wird vorgeschlagen, ein wechselbar temperierfähiges Behältnis mit aus etwa parallel zueinander verlaufendem Außenmantel und Innenmantel gebildetem geschlossenen Hohlkörper als Ummantelung mit bis zum Hochvakuumbereich evakuierter Innenatmosphäre, einem eine untere Öffnung des Hohlkörpers verschließenden Fußteil und einem eine obere Öffnung des Hohlkörpers verschließenden Deckel, oder diese obere Öffnung des Hohlkörpers durch einen Randbereich mit innenliegendem Deckel verschließbar ist und das wechselbar temperierfähige Behältnis einen oder mehrere Energiespeicher sowie einen Lagerraum aufweist.
Der erwähnte Hohlkörper ist vorzugsweise von rohrförmiger Gestalt und bildet einen Hohlzylinder, dessen Außenmantel ein Außenrohr und dessen Innenmantel ein Innenrohr ist. Das Außenrohr und das Innenrohr sind an den jeweiligen stirnseitigen Randbereichen miteinander hermetisch verbunden. Im Bereich dieser hermetischen Verbindung sind an dem Innenrohr und/oder dem Außenrohr umlaufende Ausformungen oder Aushalsungen, welche mit mindestens zwei Freiheitsgraden als Feder- bzw. Dehnungselemente ausgebildet sind. Über die Ausformungen oder Aushalsungen erfolgt ein Ausgleich der Materialverformung, die in Folge der Differenzen der am Innenrohr und am Außenrohr anliegenden Temperaturen auftritt. Die Ausformungen oder Aushalsungen von Innenrohr und/oder Außenrohr bilden eine gedachte umlaufende Ringkammer, die die Form eines Körpers hat, der sich bei der Bewegung einer ebenen Figur längs einer geschlossenen Kurve - beispielsweise durch deren Drehung um die Achse, welche in der Ebene dieser Figur liegt und sich nicht schneidet - ergibt. Die umlaufenden Ausformungen oder Aushalsungen an den Stirnseiten des Innenrohrs und des Außenrohrs haben gemäß der Erfindung unterschiedliche Formen, vorzugsweise sind sie doppelsinusförmig bzw. S-förmig oder kreisbogenförmig ausgebildet. In jedem Fall verlängern die Ausformungen oder Aushalsungen den Wärmeweg zwischen dem Innenrohr und dem Außenrohr. Die Wärmeübertragung wird über die Ausformungen oder Aushalsungen auch dadurch vermindert, dass die Materialstärken dieser um mindestens ein Viertel geringer sind als die Materialstärken von Innen- und Außenrohr.
Gemäß der Erfindung werden das die untere Öffnung des Hohlkörpers verschließende Fußteil und der die obere Öffnung des Hohlkörpers verschließende Randbereich von an den jeweiligen Stirnseiten des Hohlkörpers umlaufenden, nach innen und/oder außen gerichteten Stabilisierungselementen und/oder auf und/oder aufschäumenden Klebern gehalten. Die Stabilisierungselemente sind vorteilhafterweise als Sicken ausgebildet. Das verschließende Fußteil und der die obere Öffnung des Hohlkörpers verschließende Randbereich mit innenliegendem Deckel sind fest über den unteren bzw. oberen Rand von Innenrohr und Außenrohr überstülpend angeordnet und weisen in ihrem Inneren hochisolierende Körper auf.
Zur weiteren Verbesserung der Wärmeisolation ist das Innenrohr mit einer Superisolationswicklung, bestehend aus Abstandhalter, strahlungsreflektierenden Materialien und wahlweiser Einbringung eines chemischen Getters oder eines Adsorptionsmaterials ausgestattet. Das wechselbar temperierfähige Behältnis ist - wie bereits ausgeführt - im oberen Bereich mit einem verschließenden Rand mit innenliegendem Deckel und im unteren Bereich mit einem Fußteil versehen. Diese den Hohlkörper an seinen Stirnseiten verschließenden Teile bestehen aus hochisolierenden Schaumstoffen, die mit einer Schale ummantelt sind. Innerhalb des verschließenden Randes, dem Deckel und dem Fußteil sind innerhalb der jeweiligen Schalen mit hochisolierendem Schaumstoff weitere hochisolierende Komponenten angeordnet

Eine andere erfindungsgemäße Ausführungsform des wechselbar temperierfähigen Behälters sieht vor, an der unteren stirnseitigen Öffnung des Hohlkörpers einen doppelten Boden, wie nachfolgend beschrieben, anzuordnen. Der doppelte Boden besteht aus definiert vorgeformten bombierten Bodenblechen, wobei ein Bodenblech den Innenmantel und ein Bodenblech den Außenmantel verschließt, so dass der Zwischenraum zwischen den beiden Bodenblechen mit dem Zwischenraum zwischen Innenmantel und Außenmantel des Hohlkörpers in Verbindung steht und in einem Arbeitsgang evakuiert werden kann. Die Bodenbleche sind randseitig etwa rechtwinklig bogenförmig umgebördelt, zu ihrem Zentrum hin mit einer definierten Wölbung versehen und bestehen vorzugsweise aus Stahlblech und sind nach Verschweißen mit dem Außenmantel bzw. mit dem Innenmantel mit mindestens zwei Freiheitsgraden als Feder- bzw. Dehnungselement ausgebildet. Als zusätzliche Feder- bzw. Dehnungselemente sind in den Blechböden rundumlaufende Sicken eingeformt. Die Verbindung von Innenmantel mit dem einen Bodenblech und die andere Verbindung des äußeren Blechs mit dem Außenmantel erfolgt vakuumdicht. Die Bleche haben eine Materialstärke, die um mindestens ein Viertel geringer ist als die Materialstärke von Außenund Innenmantel.

Zwischen den beiden Blechen sind stützende und beabstandende Stützstrukturen angeordnet. Die beiden Bleche wölben sich beim Evakuieren definiert zueinander und werden - wie oben beschrieben - durch Stützstrukturen beabstandet. Am äußeren Bodenblech sind eine konventionelle Evakuierungsöffnung und ein Behälter für die Aufbewahrung und Abgabe von Gettermaterial vorgesehen. Der Bodenbereich des erfindungsgemäßen Behälters ist mit einem Fußteil, bestehend aus einer Kunststoffschale mit im Inneren angeordnetem formstabilen Schaumkunststoff, ummantelt, wobei das Fußteil fest über den unteren Rand des Außenrohres und des äußeren Bodenbleches überstülpend angeordnet ist. Das Fußteil dient im Wesentlichen dem Schutz des äußeren Behälterbodens und der Verbindungsstellen zwischen Außenmantel und entsprechendem äußeren Boden.

Eine weitere Ausführungsform sieht vor, dass das wechselbar temperierfähige Behältnis erfindungsgemäß speziell für den Transport von größeren Einheiten übereinandergestapelt wird, so dass mehrere Behältnisse einen gemeinsamen Lagerraum bilden, und durch ein oder mehrere Verbindungselemente verbunden sind. Die Verbindungselemente sind ebenso wie Fußteil und verschließender Randbereich an den jeweiligen Stirnseiten des Hohlkörpers an umlaufenden, nach innen und/oder außen gerichteten Stabilisierungselementen arretiert und/oder werden von aufschäumenden Klebern gehalten.

Gemäß der Erfindung werden für die besonders kritischen Bereiche des wechselbar temperierfähigen Behältnisses, nämlich für Deckel, Isolationsring bzw. ringförmig verschließenden Randbereich, Fußteil und Verbindungselement isolierende Komponenten vorgeschlagen, die Evakuierungszonen mit in diesen angeordneten Stützstrukturen aufweisen. Diese isolierenden Komponenten werden im Inneren von Deckel, Fußteil und Verbindungselement sowie des Isolationsrings angeordnet. Die Wände bestehen vorzugsweise aus einer ein- oder mehrteiligen harten Kunststoffschale, in der verschiedene hochisolierende Körper in formstabilem Kunststoffschaum eingebettet sind. Ein Isolierkörper ist von flach-zylindrischer Gestalt und findet Verwendung vorzugsweise im Deckel und im Fußteil eines wechselbar temperierfähigen Behältnisses. Der Isolierkörper besteht aus einem zylindrischen Mantel, dessen obere und untere Öffnung von vorgeformten bombierten Blechen verschlossen ist. Vorzugsweise bestehen der zylindrische Mantel und die vorgeformten bombierten Bleche aus Edelstahlblech, wobei deren Materialstärke um mindestens ein Viertel geringer dimensioniert ist als die üblichen Wände eines vakuumisolierten wechselbar temperierfähigen Behälters. Die beiden Bleche und der Mantel sind gemäß der Erfindung in ihren Randbereichen mit umlaufenden Ausformungen oder Aushalsungen versehen, welche mit mindestens zwei Freiheitsgraden als Feder- bzw. Dehnungselemente ausgebildet sind. Als zusätzliches Feder- bzw. Dehnungselement sind die beiden Bleche mit rundumlaufenden Sicken versehen. Unabhängig von den Ausformungen oder Aushalsungen sind die bombierten Bleche an ihren Rändern umgebördelt und mit dem Mantel vakuumdicht verschweißt, so dass ein flacher Hohlkörper entsteht. Dieser Hohlkörper ist in seiner Dimensionierung so gewählt, dass ein Deckel bzw. ein Fußteil in ihrer größten flächenmäßigen Ausdehnung fast vollständig ausgefüllt sind. Damit werden Wärmebrücken weitestgehend minimiert bzw. ausgeschlossen. Der Innenraum eines solchen Hohlkörpers ist partiell oder den Innenraum fast vollständig ausfüllend mit Stützstrukturen versehen und ist nach Evakuierung des Innenraums ein im Wesentlichen fertiger hochisolierender Körper. Die Stützstrukturen haben dabei die Aufgabe, Kräfte von dem einen Blech auf das gegenüberliegende Blech zu übertragen, und sind in ihrem Aufbau so gewählt, dass sie in mehreren Lagen versetzt übereinander angeordnet sind. Zwischen mehreren Lagen Stützstrukturen sind in eine oder mehrere Lagen perforierte Folien und/oder Evakuierungsdrainagen, vorzugsweise Glasvlieslagen, eingelegt. Die Anordnung der Stützstrukturen kann kreis-, ring-, segment- oder punktförmig oder den Innenraum eines Hohlkörpers vollständig ausfüllend gewählt werden.

Ein solcher hochisolierender Körper wird in einem Deckel oder Fußteil eines Behälters bei der Herstellung so positioniert, dass die Wandung des Körpers die erwähnte harte Kunststoffschale von Deckel bzw. Fußteil nicht berührt. Der hochisolierende Körper wird in erwähnte Kunststoffschalen formstabil eingeschäumt und damit arretiert. In den Deckel bzw. das Fußteil sind zusätzlich eine oder mehrere Lagen eines Reflexionsmaterials eingelegt, um eine zusätzliche Strahlungsabschirmung gegenüber der Außenatmosphäre zu erreichen. Das Reflexionsmaterial kann auch in die erwähnte harte Kunststoffschale eingearbeitet sein. Nach dem Ausschäumen von Deckel und Fußteil erfolgt der Verschluss derselben mit weiteren Teilen von passgenauen harten Kunststoffschalen und Versiegelung der Nahtstellen. Es liegt im Bereich der Erfindung, beispielsweise das Fußteil passgenau zur Ummantelung des Behälters herzustellen, so dass nur eine Versiegelung zwischen dem Rand vom Fußteil und der Behälterwand erfolgt.

Eine weitere Ausführungsform eines hochisolierenden Körpers wird wiederum für Deckel und Fußteil vorgeschlagen. Dieser erfindungsgemäße Körper wird nicht gesondert in Deckel und Fußteil als separater hochisolierender Körper eingelegt, sondern wird mit Deckel bzw. Fußteil speziell aufgebaut. Dazu sind bei entsprechender Formgebung von außen nach innen folgende Schichten verschiedenen Materials miteinander verklebt bzw. versiegelt. Einer äußeren aushärtbaren Deckschicht, die vorzugsweise aus Epoxidharz mit eingelegter strahlungsreflektierender Folie besteht, schließen sich mehrere Lagen von Laminatschichten an. Die schichtweise Laminierung erfolgt vorzugsweise mittels Glasseide und Epoxidharz. Je nach Aufbau und Gestaltung von Deckel und Fußteil werden größere Hohlräume zwischen den einzelnen Schichten mit Kunststoff ausgeschäumt. Metallbedampfte Kunststofffolien, vorzugsweise Aluminiumverbundfolie oder Metallfolien, werden lagenweise abwechselnd mit Glasvlieslagen so eingebettet, dass mit Einbringung von Stützstrukturen im Inneren des Deckels bzw. des Fußteils ein evakuierbarer Hohlraum, umgeben von diffusionsdichter Folie, entsteht. Innerhalb des so geschaffenen hochisolierenden Körpers sind erwähnte Stützstrukturen angeordnet. Zwischen diesen sind mehrere Lagen Glasvlies eingebettet. Glasvlieslagen sind gemäß der Erfindung auch zur vollständigen Umhüllung der Stützstrukturen vorgesehen. Die Beschaffenheit der Glasvlieslagen ist so gewählt, dass diese gleichzeitig als Evakuierungsdrainagen dienen. Vorzugsweise sind zwischen den Lagen von Stützstrukturen noch perforierte Reflexionsfolien angeordnet. Die Evakuierung des Innenraums dieses Isolierkörpers erfolgt in konventioneller Weise über einen Evakuierungsstutzen in an sich bekannter Weise. Dabei führt der Evakuierungsstutzen zweckmäßigerweise in den oberen mittleren Deckelbereich, so dass nach mehreren Jahren nach Absinken des Vakuums eine erneute Evakuierung von außen erfolgen kann. Der hochisolierende Körper wird formstabil mit dem weiteren Aufbau von Deckel bzw. Fußteil von weiteren Laminatschichten und/oder eingeschäumtem Kunststoff eingeschlossen und mit einer verschließenden Deckschicht versiegelt

Die Erfindung sieht weiterhin vor, zwei wechselbar temperierfähige Behälter - wie weiter oben beschrieben - als größere Einheit übereinander gestapelt miteinander zu verbinden. Eine derartige Verbindung erfolgt mit einem Verbindungselement. Diese Verbindung stellt eine besonders kritische Zone dar. Gemäß der Erfindung wird in das Verbindungselement eine weitere Ausführungsform eines hochisolierenden Körpers eingebracht, der von doppelrohrförmiger Gestalt ist und für ein Verbindungselement und/oder für einen ringförmigen Rand des Behälters, in welchen ein Deckel zum Verschließen des Behälters eingelegt wird, Verwendung findet. Der hochisolierende Körper von doppelrohrförmiger Gestalt besteht aus ineinander gefügten zylindrischem Innenrohr und zylindrischem Außenrohr, die an ihren jeweiligen Stirnseiten durch eine Schweißnaht vakuumdicht verbunden sind und so einen hohlzylindrischen Körper bilden, dessen evakuierter hohlzylindrischer Innenraum partiell oder den Innenraum fast vollständig ausfüllend Stützstrukturen enthält, um Kräfte zwischen Innenrohr und Außenrohr zu übertragen.

Im Inneren des wechselbar temperierfähigen Behältnisses sind Energiespeicher, beispielsweise sensorische Speicher, Latentspeicher oder chemische Speicher, angeordnet. Diese Energiespeicher bestehen aus unterschiedlichen geometrischen Formen und werden im Bereich des Deckels als ein- oder mehrlagiges Plattenelement und/oder im Bereich des Bodens ebenfalls als ein- oder mehrlagiges Plattenelement und/oder, je nach einzulagernden Stoffen, im Lagerraum des wechselbar temperierfähigen Behältnisses als zylinderförmiger, hohlzylinderförmiger, platten-, segment- oder sektorförmiger Körper eingelegt.

Das wechselbar temperierfähige Behältnis weist eine an sich bekannte Temperaturmesseinrichtung auf, deren Daten sowie Angaben zu Ort, Gegenstand, Temperaturverlauf und andere Informationen jederzeit in üblicher Weise abrufbar, speicherbar und neu einstellbar sind. Eine Verbindung dieser Datenerfassung und -auswertung mehrerer Behältnisse ist vorgesehen.
Da es sich bei den mit den erfindungsgemäßen Behältnissen zu transportierenden Materialien um meistens recht wertvolles Gut - beispielsweise für Organtransplantationen - handelt, liegt es nahe, neueste Vorrichtungen - beispielsweise Chipkarten mit Temperatur-Aufzeichnungsfunktion - zu verwenden. So kann die Chipkarte mit Sensor, Speicher, Batterie und einem zeitbestimmenden Element als Pass für das transportierte Gut dienen.

Verwendet werden Behälter mit den speziellen isolierenden Komponenten und Isolierkörpern nach dieser Anmeldung sowohl als Einzelbehälter als auch als Stapelbehälter. Das erfindungsgemäß vorgeschlagene wechselbar temperierfähige Behältnis ist bei langen Standzeiten in sehr unterschiedlichen Temperaturbereichen für Transport und Lagerung beispielsweise von
- allgemeinbiologischem Material, beispielsweise lebende Zellkulturen bei 37 °C
- klassischer Lagerung von Thrombozyten bei ca. 22 °C
- Vollblut bei ca. 4 °C
- Blutplasma bei ca. -40 °C
- Zellkulturen, Nabelblut, Haut u. a. bei -90 °C bis -75 °C geeignet

Die Eignung für andere Temperaturbereiche liegt im Bereich der Erfindung.
So gefertigte wechselbar temperierfähige Behältnisse sichern Standzeiten des Evakuierungsraums der hochisolierenden Körper in Deckel, Fußteil, Isolationsring und Verbindungselement von mindestens 5 Jahren und gewährleisten dem wechselbar temperierfähigen Behältnis Standzeiten von etwa 140 Stunden in einem Temperaturbereich von -90 °C bis -75 °C bei Anwendung entsprechender Energiespeicher. Bei anderen Temperaturbereichen ändern sich die Standzeiten entsprechend.

Die Erfindung wird im folgenden anhand der in den Zeichnungen dargestellten Ausführungsbeispiele näher erläutert und beschrieben. Die den Zeichnungen und der Beschreibung zu entnehmenden Merkmale können bei anderen Ausführungsformen der Erfindung einzeln für sich oder zu mehreren in beliebigen Kombinationen Anwendung finden. Im Besonderen ist hervorzuheben, dass es im Bereich der Erfindung liegt, den Aufbau von Deckel, Fußteil, Isolationsring und Verbindungselement sowie das Einbetten der verschiedenen hochisolierenden Körper und die Anordnung und Gestaltung der Stützstrukturen untereinander beliebig zu kombinieren. Es sei ausdrücklich darauf hingewiesen, dass sich die nachfolgenden Beispiele, die anhand verschiedener Ausführungsformen eines wechselbar temperierfähigen Behältnisses für den Transport erläutert sind, auch auf stationäre wechselbar temperierfahige Behältnisse beziehen. Diese Art Behältnisse werden in an sich bekannter Weise zur Nachkühlung bzw. zum Ausgleich von Temperaturdifferenzen an entsprechende Aggregate angeschlossen, wobei ein System mit Messeinrichtung, Energiespeicher, Datenspeicher und Erfassungs- bzw. Auswerteeinheit sowohl bei Transportbehältnissen als auch bei stationären Behältnissen Anwendung findet.

Die dazugehörigen Zeichnungen zeigen in
- Fig. 1: einen Transportbehälter im Schnitt,
- Fig. 2: einen Teilschnitt durch ein Außenrohr,
- Fig. 3: einen Teilschnitt durch ein Innenrohr,
- Fig. 4: Behälterrandbereich im Schnitt als Beispiel nach dem Stand der Technik,
- Fig. 5: Behälterrandbereich im Schnitt nach der Erfindung,
- Fig. 6: Behälterrandbereich im Schnitt in einer Ausführungsform nach der Erfindung,
- Fig. 7: Behälterrandbereich im Schnitt in einer Ausführungsform nach der Erfindung,
- Fig. 8: Behälterrandbereich im Schnitt dargestellt in drei Ausführungsformen nach der Erfindung,
- Fig. 9: einen vergrößerten Transportbehälter im Stapel aus zwei Behältern,
- Fig. 10: einen Teilschnitt durch einen unteren Abschnitt eines Behälters ohne Fußteil,
- Fig. 11: schematischer Aufbau eines Deckels mit Isolierkörper für ein wechselbar temperierfähiges Behältnis im Schnitt,
- Fig. 12: schematischer Aufbau eines Fußteils mit Isolierkörper für ein wechselbar temperierfähiges Behältnis im Schnitt,
- Fig. 13: schematischer Aufbau eines Verbindungselements mit Isolierkörper für ein wechselbar temperierfähiges Behältnis im Schnitt,
- Fig. 14: schematischer Aufbau eines Deckels mit einer weiteren Ausführungsform einer Isolierkomponente für ein wechselbar temperierfähiges Behältnis im Schnitt.

### Beispiel 1:

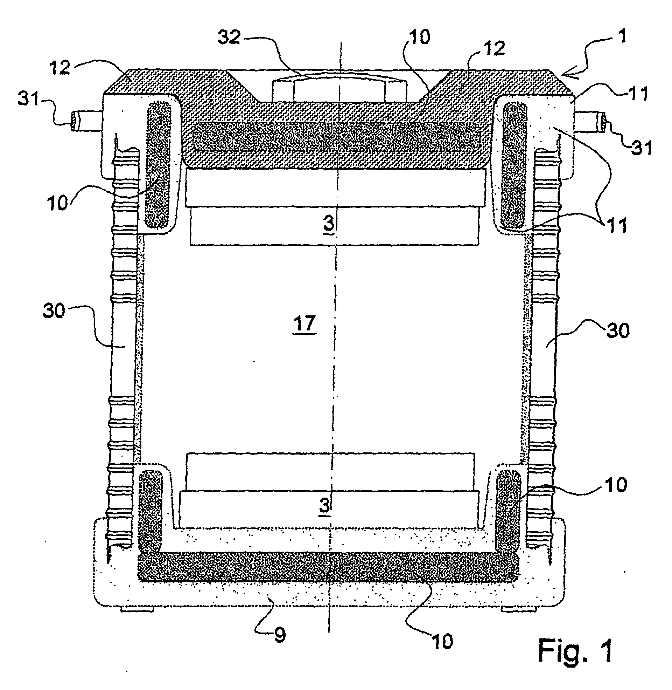

Ein erfindungsgemäßes wechselbar temperierfähiges Behältnis wird anhand eines Behälters für den Transport von verschiedenen Zellarten in einem Temperaturbereich von cirka -80°C beschrieben. Fig. 1 zeigt einen Transportbehälter **1,** bestehend aus einer Ummantelung **30** mit Deckel **12** und Fußteil **9.** Im Inneren des Behälters 1 befindet sich ein Lagerraum **17,** in welchen mit dem Deckel **12** und dem Fußteil **9** korrespondierende Energiespeicher **3,** die im vorliegenden Ausführungsbeispiel vor ihrer Einbringung in den Behälter **1** auf ca. minus 120°C abgekühlt werden, hineinragen. Im oberen Teil des Transportbehälters **1** wird dessen Rand von einem Isolationsring **11** umfasst. In den Isolationsring **11** ist der Deckel **12** eingelassen. Der ringförmige Rand bzw. Isolationsring **11,** das Fußteil **9** und der Deckel **12** bestehen jeweils aus einer Kunststoffschale und aus einem oder mehreren an sich bekannten Isolationsstoffen, vorzugsweise aus Schaumstoff Innerhalb dieser Isolationsstoffe sind als Isolierkörper **10** Folien-Vakuumisolationen in Scheiben-, Platten-, Ring-, Topf-, Zylinder-, Hohlzylinder- oder Kreissegmentform angeordnet. Es liegt im Bereich der Erfindung, diese Isolierkörper **10** als Vakuum- bzw. Hochvakuum-Behältnisse aus Kunststoff, Glas, Keramik und/oder Metall auszugestalten, in deren Evakuierungszonen Stützstrukturen - wie sie nachfolgend noch zu beschreiben sind - und Reflexionsmaterialien angeordnet sind. Die Isolierkörper 10 mit Vakuum werden innerhalb der Kunststoffschale von Deckel **12** und Fußteil **9** und gegebenenfalls auch im Isolationsring **11** in einem Isolationsstoff eingeschäumt

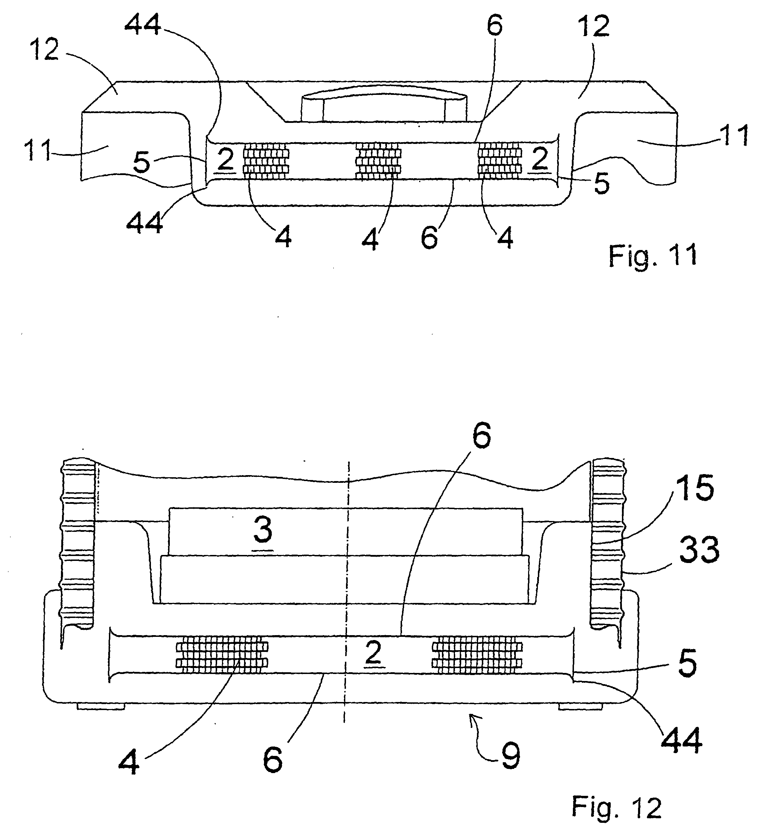

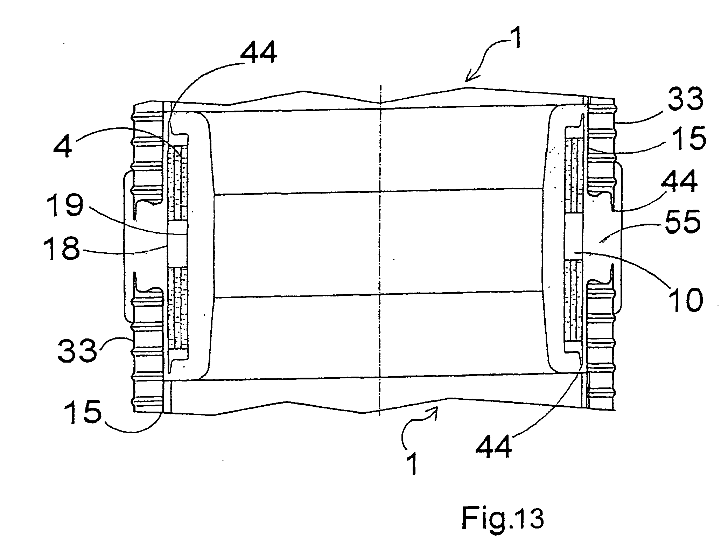

Eine Ausführungsform des Deckels **12** gemäß Fig. 11 sieht vor, in den Deckel **12** aus Kunststoff einen flachzylindrisch ausgestalteten Isolierkörper **2** formstabil einzuschäumen. Der zylindrisch ausgestaltete Körper **2** besteht aus einem zylindrischen Mantel **5,** hier aus 0,4 mm starkem Stahlblech. Der zylindrische Mantel **5** ist stirnseitig auf beiden Seiten jeweils mit einem bombierten Blech **6** verschlossen. Die beiden bombierten Bleche **6** sind randseitig mit dem Mantel **5** an der Schweißnaht **44** verbunden. Die Schweißnähte **44** sind vakuumdicht gefertigt. Die beiden Bleche **6** und der Mantel **5** sind gemäß der Erfindung in ihren Randbereichen mit umlaufenden Ausformungen oder Aushalsungen, wie sie in den Figuren 12 und 13 auch an den Enden der Rohre **15;33** bzw. **18;19** erkennbar sind, versehen. Die umlaufenden Ausformungen oder Aushalsungen sind mit mindestens zwei Freiheitsgraden als Feder- bzw. Dehnungselemente ausgebildet. Als zusätzliches Feder- bzw. Dehnungselement werden die beiden Bleche **6** mit - in den Figuren nicht näher dargestellten - rundumlaufenden Sicken versehen. Im Inneren des Körpers **2** sind zellenförmige Stützstrukturen **4** in mehreren Lagen versetzt übereinander angeordnet. Über einen in der Figur 11 nicht dargestellten Evakuierungsstutzen wird die Innenatmosphäre des Körpers **2** evakuiert. Bei dem Evakuierungsvorgang wölben sich die dünnwandigen Bleche **6** nach innen und werden von der zellenförmigen Stützstruktur **4** gestützt. Ihre Anordnung erfolgt je nach Gestalt des Isolierkörpers **2** partiell, ringförmig oder den Evakuierungsraum voll ausfüllend. Zwischen den einzelnen versetzt übereinander angeordneten Stützstrukturen 4 sind perforierte Folien eingelegt

Analog zur Anordnung eines Isolierkörpers **2** im Deckel **12** kann auch das Fußteil **9** einen zylindrisch ausgestalteten Isolierkörper **2** beinhalten. Dieser ist in dem Fußteil **9**, welches aus einer harten Kunststoffschale besteht, formstabil mit Kunststoff eingeschäumt und randseitig versiegelt.

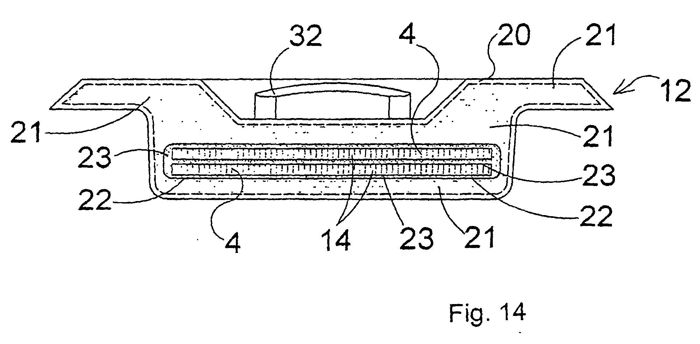

Eine weitere Ausführungsform der Konstruktion des Deckels **12** mit einem Isolierkörper **14** ist in Fig. 14 dargestellt Der Körper **14** ist umgeben von einer oder mehreren Lagen metallbedampfter Kunststofffolie **22** oder dünner Metallfolie, welche auf einer oder mehreren Lagen von Glasvlies **23** aufliegt, wobei die Glasvlieslagen **23** von einer oder mehreren Lagen, hier in diesem Ausführungsbeispiel von zwei Lagen Stützstrukturen **4,** gestützt werden. Zwischen den beiden Lagen Stützstrukturen **4** sind wiederum Lagen von Glasvlies **23** und metallbedampfter Kunststofffolie **22** angeordnet Die zwischen den Stützstrukturen **4** liegenden Lagen von Glasvlies **23** und metallbedampfter Kunststoffolie **22** oder dünner Metallfolie sind perforiert, um eine zügige und annähernd vollständige Evakuierung des Innenraums zu ermöglichen. Um den Isolierkörper **14** sind eine oder mehrere Lagen von Laminatschichten **21,** die vorzugsweise aus mit Epoxidharz verklebter Glasseide bestehen, angeordnet Der Deckel **12** ist von einer Deckschicht **20** umgeben, die vorzugsweise aus Epoxidharz besteht. In der Deckschicht **20** sind eine oder mehrere Lagen der metallbedampften Kunststofffolie **22** oder dünnen Metallfolie eingearbeitet Bei der Herstellung des Deckels **12** wird vorzugsweise der zum Inneren des Behälters **1** gerichtete untere Teil des Deckels **12** vorgefertigt und danach mehrere Lagen von Laminatschichten **21** zur formstabilen Ausformung des oberen übergreifenden Randbereiches aufgebracht Abschließend wird der obere Teil des Deckels **12** ebenfalls mit einer Deckschicht **20** versehen und der Griff **32** montiert. Die Evakuierung des Innenraums des Körpers **14** zu einem Hochvakuum-Superisolator erfolgt in an sich bekannter Weise über einen Evakuierungsstutzen - in der Figur 14 nicht dargestellt - zweckmäßigerweise über den oberen inneren Deckelbereich.

Die in mehreren Lagen übereinander angeordneten Stützstrukturen **4** bestehen aus runden oder polygonförmigen miteinander verbundenen Zellstrukturen. Erfolgt eine übereinander versetzte Anordnung der Stützstrukturen **4,** so sind Glasvlieslagen **23** und/oder metallbedampfte Kunststoffolien **22** zwischengelegt Der Gesamtaufbau des Deckels **12** gewährleistet eine sichere Versiegelung und Verklebung der metallbedampften Kunststofffolie **22** und damit ein über Jahre anhaltendes Vakuum. Für besondere Anforderungen werden aus Stabilitätsgründen die innerhalb des Isolierkörpers **14** eingelegten Lagen von Glasvlies **23** von einer besonderen Dicke gewählt. Eine entsprechend dicker gewählte Glasvlieslage **23** wird dann als Evakuierungsdrainage benutzt.

Der Aufbau des Deckels **12** mit dem Isolierkörper **14** nach Fig. 14 wird gemäß der Erfindung auch für den Aufbau eines Fußteils **9** gewählt, wobei im Prinzip der in der Figur 12 dargestellte zylindrisch ausgestaltete Isolierkörper **2** gegen den Isolierkörper **14** ausgetauscht wird. Der Körper **14** wird nicht, wie oben beschrieben, formstabil mit Kunststoff eingeschäumt, sondern in mehreren Lagen von metallbedampfter Kunststofffolie **22,** Glasvlieslagen **23** und Laminatschichten **21** gebildet, die jeweils mit Epoxidharz verklebt und versiegelt sind.

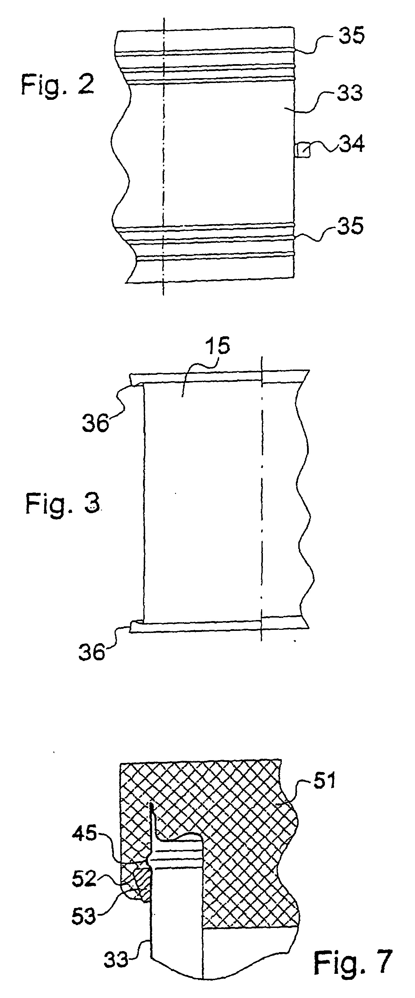

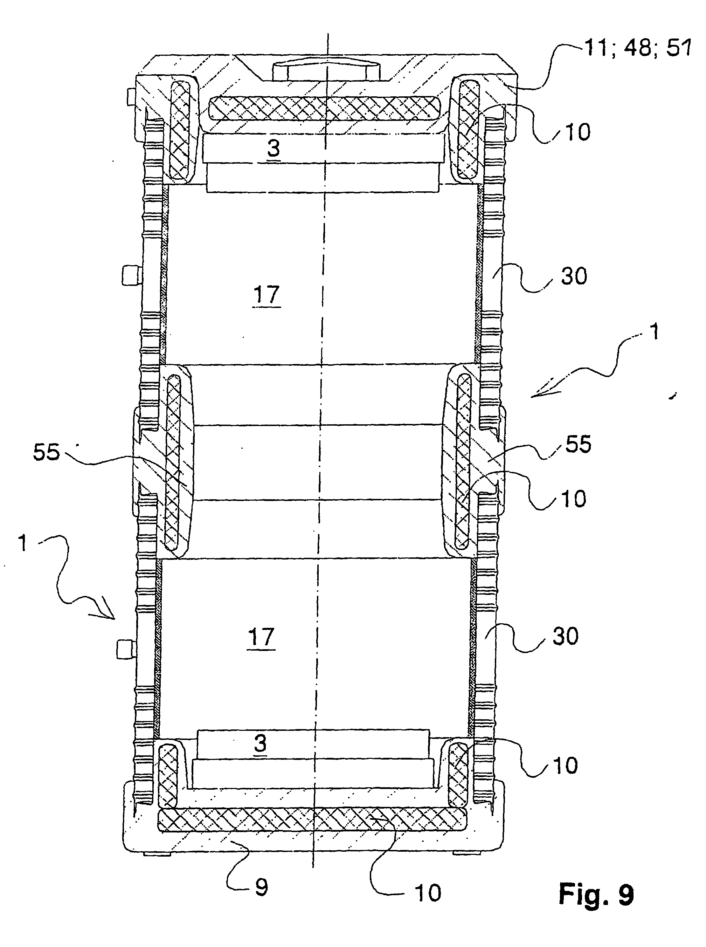

Die Ummantelung **30** gemäß der Fig. 1 und 9 besteht aus einem rohrförmigen doppelwandigen Körper, der vorzugsweise aus Edelstahlblech hergestellt ist. Der rohrförmige doppelwandige Körper ist auf der Behälterinnenwand bzw. dem Innenrohr **15** mit einer Superisolationswicklung versehen, die aus einem Abstandshalter in Verbindung mit einer strahlungsreflektierenden Folie besteht. Zusätzlich ist das Einbringen eines chemischen Getters oder eines Adsorptionsmaterials möglich. Die Fig. 2 und 3 zeigen jeweils Teilschnitte durch ein Außenrohr **33** mit dem Evakuierungsstutzen **34** und ein Innenrohr **15** als Bestandteile der Ummantelung **30.** Das Außenrohr **33** weist in mehreren Bereichen nach außen gewölbte rundumlaufende Sicken **35** auf.Das Innenrohr **15** weist in seinem oberen und unteren Randbereich stirnseitig jeweils nach außen gerichtete doppelsinusförmige oder S-förmige Auskehlungen **36** auf.

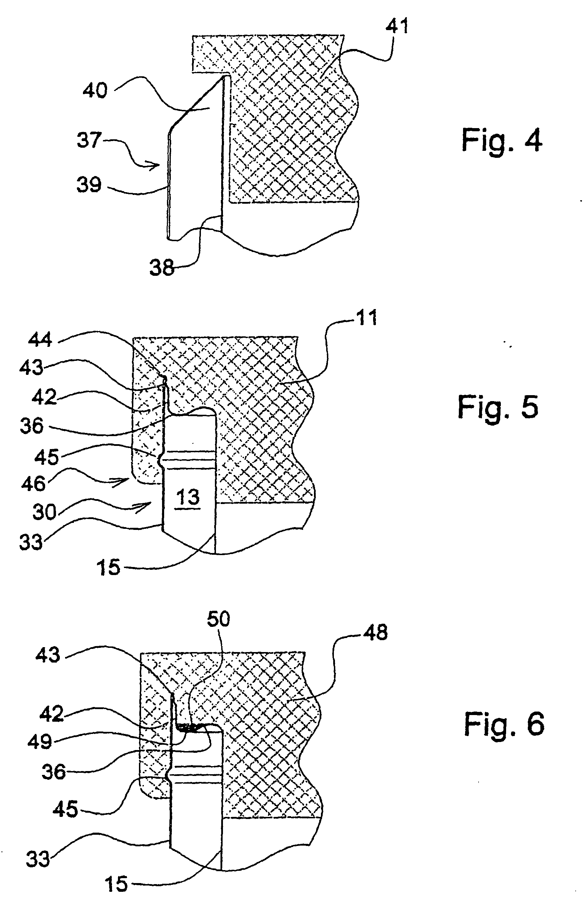

Zur besseren Veranschaulichung der erfindungsgemäßen Lösungen wird in Fig. 4 im Schnitt ein Behälterrandbereich mit einem Deckel **41** als ein Beispiel nach dem Stand der Technik erläutert. Fig. 4 zeigt einen Behälterrandbereich, bestehend aus einer Ummantelung **37** mit einem Innengeläß **38** und einem äußeren Mantel **39.** Innerhalb der Ummantelung **37** ist ein Isolierstoff **40** eingelagert, welcher zumeist aus Polyurethan, Styropor, Glaswolle, Korkplatten oder anderen Isolierstoffen besteht. Auch ist die Verwendung von Vakuum innerhalb von Ummantelungen **37** bekannt. Bei der Verwendung eines Vakuums zur Isolierung finden in der Praxis Edelstahlbleche oder Aluminiumlegierungen für das Innengefäß **38** und den äußeren Mantel **39** von mindestens 2 mm Materialstärke Anwendung. Wird Material geringerer Stärke verwendet, kommt es insbesondere an den Verbindungen von Innengefäß 38 und äußeren Mantel 39 zum Materialbruch oder zum Reißen von Schweißnähten bzw. zur Implosion der Behälterwandung. Wesentlich ist aber die Feststellung, dass es an den Übergangsstellen von Innen- zur Außenwand bzw. am Behälterrandbereich um den Deckel **41** zu Wärmebrücken und somit zu hohen Temperaturverlusten kommt.

In Fig. 5 ist als Ausschnitt ein erfindungsgemäßer Behälterrandbereich dargestellt. Das Innenrohr **15** besteht aus maximal 0,6 mm starkem Edelstahlblech und ist im oberen und unteren Übergangsbereich - wobei in Fig. 5 nur der obere Übergangsbereich dargestellt ist - zum Außenrohr **33** hin und mit diesem verbindend mit einer jeweils um die Enden des Innenrohrs **15** rundumlaufenden, in radialer Richtung S-förmig verlaufenden Auskehlung **36** versehen, wobei der äußere Schenkel **42** sich im Verhältnis zu den S-förmigen Bögen vorzugsweise lang ausstreckt und zusätzlich mit einer Lippe **43** versehen ist. Das Außenrohr **33** verläuft am Ende leicht nach innen angefast zur Lippe **43** der S-förmigen Auskehlung **36** und wird an der Naht **44** bei der Herstellung der Ummantelung **30** mit dem Innenrohr **15** verschweißt. Gleichermaßen erfolgt die Verbindung von Innenrohr **15** und Außenrohr **33** an der dem Deckel **12** bzw. dem Isolationsring **11** entgegengesetzten Öffnung der rohrförmigen Ummantelung **30.** Das Außenrohr **33** ist so um das Innenrohr **15** angeordnet, dass es mit diesem einen hermetisch verschlossenen Hohlzylinder bildet, in welchem über den Evakuierungsstutzen **34** eine Hoch-Vakuum-Superisolation **13** im Bereich von ≤ 10⁻⁴ Pa erzeugt wird und damit eine betriebliche Standzeit des Vakuums und somit des Superisolators von 5 Jahren gewährleistet wird. Die Stabilisierung des Vakuums erfolgt durch Getterung bzw. Einbringung eines Absorbermittels.

Das auf diese Weise verbundene Innenrohr **15** und Außenrohr **33** sind durch die hier beschriebene S-förmige Auskehlung **36** federnd miteinander verbunden. Die S-förmige Auskehlung **36** ist ein mindestens zwei Freiheitsgrade aufweisendes Feder- bzw. Dehnungselement und kann gemäß der Erfindung jede beliebige den Wärmeweg verlängernde Form haben.

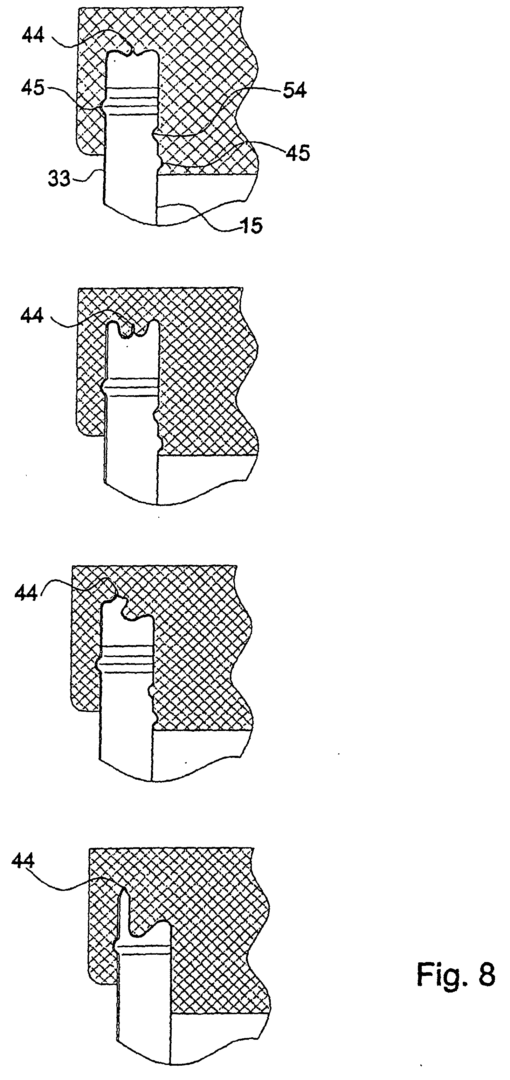

In Fig. 8 sind vier weitere Beispiele der Verbindung von Innenrohr **15** und Außenrohr **33** dargestellt. Das Innenrohr **15** und das Außenrohr **33** verlaufen an ihren oberen und unteren Enden jeweils etwa kreisbogenförmig zueinander und werden an der Naht 44 miteinander verschweißt. In das Innenrohr **15** sind zusätzlich nach außen gerichtete Sicken **45** und nach innen gerichtete Sicken **54** eingearbeitet. Die damit erzielte Materialschwächung bringt eine Verlängerung des Weges für den Wärmefluss mit sich.

Bereits erwähnt wurde, dass das Innenrohr **15** eine Wandungsstärke von 0,6 mm aufweist. Im Bereich der S-förmigen Auskehlung **36** wird durch die Dehnung bzw. Streckung des Rohrmaterials eine auf maximal 0,4 mm gewollt reduzierte Materialstärke erreicht. Damit wird der Wärmefluss wesentlich reduziert, wobei insgesamt durch die Geometrie der S-förmigen Auskehlung **36** der Wärmeweg erheblich verlängert wurde. Durch diese spezielle Gestaltung werden Wärmebrücken auf ein mögliches Mindestmaß reduziert.

Der gesamte Behälterrandbereich, wie er in Fig. 5 dargestellt ist, wird umgeben von dem Isolationsring **11,** der über den Behälterrandbereich über Stabilisierungselemente - hier in Form von nach innen und/oder außen gerichteten Sicken **45; 54 -** festgepresst oder unter Verwendung spezieller Formen unmittelbar am Behälterrandbereich aus Isolierschaumstoff hergestellt wird. Dabei hat es sich als äußerst vorteilhaft erwiesen, wenn gemäß der Erfindung der Isolationsring **11** in eine Schale eingegossen ist und ein Teilstück entlang des Innenrohres **15** über die S-förmige Auskehlung **36** und entlang des äußeren langgestreckten Schenkels **42,** der Lippe **43** und wiederum abwärts über ein Teilstück des Außenrohrs **33** verläuft und an einer Sicke **45** des Außenrohrs **33** arretiert ist. Der so entstehende übergreifende Rand **46** bewirkt eine zusätzliche Isolierung und wird ausreichend arretiert. Der Isolationsring **11** ist fest und gut abdichtend um den oberen Behälterrand angeordnet. Der übergreifende Rand **46,** der entlang des Außenrohres **33** wie beschrieben verläuft, vermindert in Verbindung mit der durch die rundumlaufende Sicke **45** einhergehenden Materialverjüngung im Außenrohr **33** Wärmebrücken.

Eine weitere Ausführungsform der Befestigung des Isolationsringes **51** ist in Fig. 7 dargestellt. Der Isolationsring **51** weist im Bereich seiner äußeren Umfassung des Außenrohrs **33** eine Fuge **52** auf, welche nach Aufbringen des Isolationsringes **51** auf die Ummantelung **30** mit einem geeigneten elastischem Kleber, z.B. Silikon **53** verschlossen wird. Somit erhält der Isolationsring **51** hinter der Sicke **45** einen besonders festen Sitz. Diese Ausführungsform ist für das Verschließen beider Enden des rohrförmigen Hohlkörpers geeignet.

Eine weitere Ausführungsform gemäß der Erfindung wird zur Befestigung eines Isolationsringes **48** in Fig. 6 dargestellt. Der am Innenrohr **15** bzw. Behälterinnenwand, am Schenkel **42** und der Lippe **43** festanliegende und abdichtende Isolationsring **48** bildet im Bereich der S-förmigen Auskehlung **36** einen Hohlraum in Form einer Ringkammer **49.** Hier und weiter wird als Ringkammer **49** eine solche Kammer bezeichnet, welche die Form eines Körpers hat, der sich bei der Bewegung einer ebenen Figur längs einer geschlossenen Kurve - beispielsweise durch deren Drehung um die Achse, welche in der Ebene dieser Figur liegt und sich nicht schneidet - ergibt. Bei der in Fig. 6 dargestellten Ausführung ist als eine solche Figur eine einem Kreissegment ähnliche gewählt, welche durch die eine Kurve der S-förmigen Auskehlung **36** und die Randfläche **50** des Isolationsringes **48** begrenzt ist, wobei die Drehachse dieser einem Kreissegment ähnlichen Figur die Symmetrieachse des Transportbehälters **1** darstellt. Der durch die Ringkammer **49** gebildete Hohlraum wird während des Einlegens bzw. Einpressens des Isolationsringes **48** mit einem thermisch isolierenden, vorzugsweise aufschäumenden Kleber ausgefüllt und der Isolationsring **48** mit Hilfe der Sicke **45** arretiert.

Gleichermaßen ist das Fußteil **9** gemäß der Fig. 1, 9 und 12 um den unteren Behälterrand befestigt. Das Fußteil **9** ist in kompakter Bauweise aus einem eingeschalten Isolierstoff gefertigt, mit Füßen und/oder Rollen versehen und dient zusätzlich der Aufnahme eines oder mehrerer an sich bekannter Energiespeicher **3.** Im Inneren des eingeschalten Isolierstoffs des Fußteils **9** sind wie im Deckel **12** und dem Isolationsring **11; 48; 51** ebenfalls Isolierkörper **10** fest eingeschäumt angeordnet Am Deckel **12** sind im Inneren des Transportbehälters **1** als Pendant zum Energiespeicher **3** im Fußteil **9** ebenfalls ein oder mehrere Energiespeicher **3** angeordnet. Als Energiespeicher **3** kommen sensorische Speicher, Latentspeicher oder chemische Speicher, die jeweils nachladbar sind, zum Einsatz.

Der Isolationsring **11; 48; 51** ist mit einer bekannten, in den Fig. nicht näher dargestellten Temperaturmess-, -speicher- und Datenübertragungseinrichtung versehen und weist eine oder mehrere Verschließ- bzw. Absperrvorrichtungen auf Um ein Festfrieren von Verschließelementen zu verhindern, sind entsprechende Lüftungsschlitze bzw. Kondenswasserabläufe in den Isolationsring **11** eingearbeitet.

Eine so aus maximal 0,6 mm bzw. maximal 1,00 mm Edelstahlblech gefertigte Ummantelung **30,** deren Öffnungen mit dem Isolationsring **11; 48; 51** und Deckel **12** sowie einem Fußteil **9** verschlossen sind, sichert Standzeiten bis zu 140 h in einem Temperaturbereich von-90°C bis -75°C.

Der Behälter **1** weist an seinen Außenseiten Griffe **31** und der Deckel **12** einen Griff **32** auf und ist mit Verschließeinrichtungen und Sicherungseinrichtungen versehen.

Durch Verwendung derartiger Isolierkörper **2; 14** im Deckel **12** und im Fußteil **9** sowie eines Isolierkörpers **10** in einem Verbindungselement **55** und im Isolationsring **11** erfolgt eine größtmögliche thermische Entkopplung zwischen dem Innenraum des wechselbar temperierfähigen Behältnisses und der Außenatmosphäre.

### Beispiel 2:

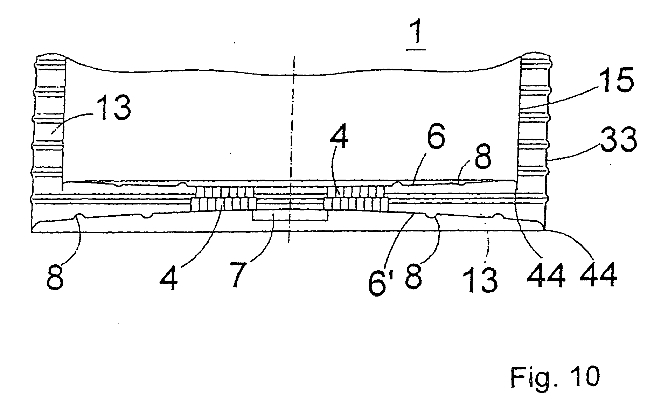

In diesem Ausführungsbeispiel werden - wie in der Figur 10 dargestellt - das Innenrohr **15** und das βenrohr **33** im unteren Bereich des Behälters **1** durch bombierte Bleche **6; 6'** verschlossen und bilden einen doppelten Boden. Ein entsprechend vorgeformtes und bombiertes, hier kreisrundes, dem Innendurchmesser des Innenrohrs **15** entsprechendes Blech **6,** ist randseitig mit dem Innenrohr **15** an dessen Stirnende an der Naht **44** vakuumdicht verschweißt. Wie für das Innenrohr **15** beschrieben, ist ein ebenfalls vorgeformtes und bombiertes Blech **6'** mit dem Außenrohr **33** an einer Schweißnaht **44** verbunden. Beide Bleche **6; 6'** sind mit rundumlaufenden Sicken **8** versehen. Vor dem Verschweißen des bombierten Bleches **6'** mit dem Außenrohr **33** ist in dem zu bildenden Hohlraum zwischen beiden Blechen **6; 6'** eine Stützstruktur **4** eingelegt, die beide Bleche **6; 6'** beabstandet. Mit dem Verschließen der unteren stirnseitigen Öffnung des Innenrohrs **15** und des Außenrohrs **33** mit den bombierten Blechen **6; 6'** an den Schweißnähten **44** entsteht ein hermetisch abgeschlossener Zwischenraum zwischen Innenrohr **15** und Außenrohr **33,** der mit dem Raum zwischen den beiden Blechen **6; 6'** in Verbindung steht. Die Innenatmosphäre dieses Zwischenraums wird über einen - in der Fig. 10 nicht dargestellten - Evakuierungsstutzen **34** evakuiert. Dabei wölben sich aufgrund der geringen Materialstärke von ca. 0,4 bis 0,6 mm die beiden bombierten Bleche **6; 6'** weiter aufeinander zu und werden von der Stützstruktur **4** gegeneinander stützend beabstandet.

Am äußeren Bodenblech **6'** ist eine Kartusche **7** für die Aufbewahrung und Abgabe von Gettermaterial angeordnet. Diese ist so beschaffen und angeordnet, dass sowohl Gettermaterial in den evakuierten Innenraum abgegeben als auch zu gegebener Zeit Gettermaterial ohne Beeinträchtigung des Vakuums nachgefüllt werden kann.

Die zellenförmige Stützstruktur **4 -** wie im Beispiel 1 beschrieben - findet auch in Beispiel 2 Anwendung. Die Stützstruktur **4** wird partiell oder den Innenraum zwischen den beiden Blechen **6; 6'** fast vollständig ausfüllend in ein oder mehreren Lagen nebeneinander und/oder übereinander angeordnet. In Figur 10 ist die Stützstruktur **4** kreisförmig in zwei versetzt übereinander angeordneten Lagen zwischen den bombierten Blechen **6; 6'** so angeordnet, dass sich die Zellwände nur punktförmig an ihren Stirnkanten berühren.

Zwischen den Blechen **6; 6'** und/oder den lageweise angeordneten Stützstrukturen **4** sind - in der Figur 10 nicht dargestellt - Reflexionsmaterialien angeordnet, vorzugsweise solche, die, sofern sie zwischen den Stützstrukturen **4** liegen, perforiert sind.

Der durch das äußere bombierte Blech **6'** gebildete äußere Boden des Behälters **1** wird mit einem Schutzteil umgeben, wobei das Schutzteil aus einer Kunststoffschale besteht, mit welcher der Behälter **1** durch verschäumten Kunststoff fest verbunden ist. Auf zusätzlich in das Schutzteil eingebrachte isolierende Komponenten kann verzichtet werden, da das Schutzteil im Wesentlichen nur schützende Funktion hat.

Ein so aus der Verbindung von Innenrohr **15** und Außenrohr **33** mittels bombierter Bleche **6; 6'** hergestellter Boden des Behälters **1,** dessen Innenraum bis auf ≤ 10⁻⁴ Pa evakuiert ist, ermöglicht Standzeiten für diese Hoch-Vakuum-Superisolation **13** bis zu fünf Jahren und gewährleistet Standzeiten des temperierten Behälters **1** für die Lagerung oder den Transport von biologischem Material von ≥ 140 Stunden bei Temperaturen im Bereich von -90 °C bis -75 °C. Nach Ablauf der Standzeit für die Temperatur werden die auswechselbaren Energiespeicher ausgetauscht und neu geladen.

### Beispiel 3:

In Fig. 9 sind zwei im Baukastensystem übereinander gestapelte Behälter 1 dargestellt, die durch ein Verbindungselement **55** fest zusammengefüge sind. Das Verbindungselement **55** stellt im Wesentlichen einen doppelten Isolationsring **11; 48; 51.** mit einer von oben aufnehmbarer Ummantelung **30** und einer weiteren von unten aufnehmbarer Ummantelung **30** dar. Seine Befestigung zwischen zwei Ummantelungen **30** erfolgt wie in den vorangegangenen Ausführungen dargelegt, indem insbesondere die Stabilisierungselemente als Arretierung dienen. Seine Ausgestaltung als Isolierkörper **10** ist so vorgenommen, wie sie vergleichbar für Deckel **12** und Fußteil **9** schon in den vorangegangenen Beispielen beschrieben wurde.

Der Isolierkörper **10** ist zweckmäßigerweise rundumlaufend, also hohlzylindrisch ausgebildet und füllt einen größtmöglichen Raum innerhalb der Schaumstoffisolation des Verbindungselements **55** aus. Das Verbindungselement **55** ist insgesamt von ringförmiger Gestalt, so dass der Lagerraum **17** des oberen Behälters **1** mit dem Lagerraum **17** des unteren Transportbehälters **1** zu einem Raum verbunden wird. Aus statischen Gründen ist das Verbindungselement **55** mit wabenförmigen Stützstrukturen, wie sie in Beispiel 1 beschrieben sind, ausgestattet und mit einer Kunststoffschale ummantelt. In Fig. 13 ist ein Teilschnitt durch zwei miteinander verbundene wechselbar temperierfähige Behältnisse mit den jeweiligen Enden von Innenrohr **15** und Außenrohr **33** dargestellt. Die andeutungsweise dargestellten und übereinandergesetzten Behälter **1** sind durch das Verbindungselement **55** miteinander fest verbunden. Das Verbindungselement **55** besteht in dieser Ausführungsform aus einer harten Kunststoffschale, in welcher der Isolierkörper **10** formstabil mit Kunststoff eingeschäumt ist. Der Körper **10** besteht aus einem zylindrischen Innenrohr **19** und einem zylindrischen Außenrohr **18,** die an ihren jeweiligen Stirnseiten an der Schweißnaht **44** vakuumdicht verbunden sind. Im Bereich dieser hermetischen Verbindung sind an dem Innenrohr **19** und/oder dem Außenrohr **18** umlaufende Ausformungen oder Aushalsungen, welche mit mindestens zwei Freiheitsgraden als Feder- bzw. Dehnungselemente ausgebildet sind, angeordnet. In diesem Beispiel sind die Ausformungen oder Aushalsungen nur am Innenrohr **19** angeformt. Im Innenraum des Körpers 10 sind Stützstrukturen 4 angeordnet. Auch hier dienen die Stützstrukturen 4 dazu, Kräfte zwischen Innenrohr **19** und Außenrohr **18** zu übertragen bzw. auszugleichen, die infolge der Evakuierung der Innenatmosphäre des Körpers **10** auftreten. Zur Vermeidung bzw. Minimierung von Wärmebrücken erstreckt sich der Körper **10** in einem definierten Abstand über die stimseitigen Enden von Innenrohr **15** und Außenrohr **33** des Behälters **1** hinaus. Somit ist auch bei der Anordnung von mehreren wechselbar temperierfähigen Behältnissen übereinander eine sehr gute Isolierung zum Innenraum möglich, und bei Verwendung geeigneter Energiespeicher werden für die übereinander gestapelten Behälter 1 Standzeiten von etwa 140 Stunden in einem Temperaturbereich von -90 °C bis -75 °C erreicht. Bei anderen Temperaturbereichen ändern sich die Standzeiten entsprechend.

Es liegt im Rahmen der Erfindung - ist aber in den Figuren nicht dargestellt -, das Außenrohr **18** des Isolierkörper **10** in seinem mittleren Bereich so auszuformen, dass der Zwischenraum zwischen der Ummantelung eines oberen und eines unteren Behälters **1** in Richtung der Schweißnähte **44** von Außenrohr **33** und Innenrohr **15** weitestgehend ausgefüllt wird. Damit erhöht sich die Isolationswirkung, und die noch bestehenden geringfügigen Wärmebrücken zwischen Außenrohr **18** des Körpers **10** und Innenrohr **15** der Behälter **1** werden weiter minimiert.

## Patentansprüche

1. Wechselbar temperierfähiges Behältnis **(1),** mit einem Lagerraum **(17)**, mit mindestens einem Energiespeicher **(3)**, mit einem Außenmantel **(33)** und einem Innenmantel **(15)**, mit Vakuumisolation, mit einem Decke **(12)** und einem Boden und diesen schützenden Fußteil **(9), dadurch gekennzeichnet, dass**
- eine obere Öffnung, die gebildet wird von stirnseitig hermetisch verbundenen Stoßkanten von dem Außenmante **(33)** mit dem etwa parallel zu diesem verlaufenden Innenmantel **(15)**, wobei Außenmantel und Innenmantel einen Hohlkörper bilden, wobei nahe der hermetischen Verbindung die stimseitigen Randflächen von Außenmantel und/oder Innenmantel mit umlaufenden Ausformungen oder Aushalsungen **(36)** versehen sind, welche mit mindestens zwei Freiheitsgraden als Feder- bzw. Dehnungselemente ausgebildet sind und dabei die Ausformungen oder Aushalsungen **(36)** eine gedachte umlaufende Ringkammer **(49)** bilden, die die Form eines Körpers hat, der sich bei der Bewegung einer ebenen Figur längs einer geschlossenen Kurve ergibt,
- die obere Öffnung mit einem verschließenden isolierenden Rand **(11; 48; 51)** mit inliegendem Deckel **(12)** versehen ist,
- der Boden aus mindestens zwei vorgeformten bombierten Blechen **(6; 6')** besteht, die mit mindestens einem Freiheitsgrad als Feder- bzw. Dehnungselemente ausgebildet sind, wovon das Blech **(6)** mit dem Innenmantel und das Blech **(6')** mit dem Außenmantel hermetisch miteinander verbunden sind und somit einen durchgehenden Innenraum **(13)** zwischen Außen- und Innenmantel und den Blechen **(6; 6')** bilden, der mindestens im Bereich der Bleche **(6; 6')** stützende und beabstandende Stützstrukturen **(4)** enthält und bis zum Hochvakuumbereich evakuiert ist,
- das Fußteil um das äußere Blech **(6')** und den unteren Randbereich des Außenmantels angeordnet ist und aus einer Kunststoffschale mit im Inneren angeordneten formstabilem Schaumkunststoff besteht,
- die Bleche **(6; 6')** an ihren Verbindungen zum Außenmantel beziehungsweise zum Innenmantel und die Ausformungen oder Aushalsunge **(36)** im oberen öffnungsbereich des Behälters **(1)** nahe der hermetischen Verbindung von Außenmantel und Innenmantel eine Materialstärke aufweisen, die um mindestens ein Viertel geringer ist als die Materialstärke von Außen- und Innenmantel.

2. Wechselbar temperierfähiges Behältnis (1), mit einem Lagerraum **(17)**, und mindestens einem Energiespeichen **(13)**, mit einem Außenmantel **(33)** und einem Innenmantel **(15)**, mit Vakuumisolation, mit einem Deckel **(12)** und einem Boden und diesen schützenden Fußteil **(9)**, **dadurch gekennzeichnet, dass**
- eine obere Öffnung und eine untere Öffnung von stimseitig hermetisch verbundenen Stoßkanten von dem Außenmantel **(33)** und dem etwa parallel zu diesem verlaufenden Innenmantel **(15)** gebildet werden und der so entstandene Hohlkörper bis zum Hochvakuumbereich evakuiert ist, wobei nahe dieser hermetischen Verbindungen die stirnseitigen Randflächen von Außenmantel und/oder Innenmantel mit umlaufenden Ausformungen oder Aushalsungen **(36)** versehen sind, welche mit mindestens zwei Freiheitsgraden als Feder- bzw. Dehnungselemente ausgebildet sind und dabei die Ausformungen oder Aushalsungen eine gedachte umlaufende Ringkammer **(49)** bilden, die die Form eines Körpers hat, der sich bei der Bewegung einer ebenen Figur längs einer geschlossenen Kurve ergibt,
- die obere Öfnung mit einem verschließenden isolierenden Rand **(11; 48; 51)** mit inliegendem Deckel **(12)** versehen ist,
- das Fußteil **(9)** die untere Öffnung des Hohlkörpers verschließt, aus einer Kunststoffschale mit im Inneren angeordneten isolierendem Schaumstoff und hochisolierenden Komponenten **(2; 10; 14)** besteht und fest über den unteren stimseitigen Ausformungen oder Aushalsungen **(36)** und dem unteren stirnseitigen Randbereich von Innenmante **(15)** und Außenmante **(33)** überstülpend angeordnet ist,
- in dem Deckel **(12),** in dem Fußteil (9), in dem ringförmig isolierendem Rand **(11; 48; 51)** und/oder in einem Verbindungsteil **(55)** für mehrere Behälter **(1)** hochisolierende Komponen **(2; 10; 14)** mit beabstandenden Stützstrukturen **(4)** angeordnet sind und deren Innenräume wahlweise evakuiert sind.

3. Wechselbar temperierfähiges Behältnis nach Anspruch 1 oder 2, wobei der Hohlkörper vorzugsweise von rohrförmiger Gestalt ist und einen Hohlzylinder bildet, dessen Außenmantel ein Außenrohr **(33)** und dessen Innenmantel ein Innenrohr **(15)** ist

4. Wechselbar temperierfähiges Behältnis nach Anspruch 1 oder 2, wobei die Ausformungen oder Aushalsungen an den Stirnseiten des Innenrohrs **(15)** und/oder des Außenrohrs **(33)** als S-förmige Auskehlung **(36)** ausgebildet sind oder etwa kreisbogenförmig zueinander verlaufen und an der Naht **(44)** verschweißt sind.

5. Wechselbar temperierfähiges Behältnis nach Anspruch 1 oder 2, wobei die Ringkammer **(49)** mit einem thermisch isolierenden, vorzugsweise aufschäumenden Kleber ausgefüllt ist.

6. Wechselbar temperierfähiges Behältnis nach Anspruch 1 oder 2, wobei die Ausformungen oder Aushalsungen an ihren Stirnseiten in einen langerstreckten Schenkel **(42)** mit Lippe **(43)** oder eine den Wärmeweg verlängernde Fase übergehen und mit einer Schweißnaht **(44)** die jeweiligen Enden des Innenrohrs **(15)** und des Außenrohrs **(33)** vakuumdicht verbunden sind.

7. Wechselbar temperierfähiges Behältnis nach Anspruch 3, wobei die Ausformungen oder Aushalsungen bis zur Verbindung von Innenrohr **(15)** und Außenrohr **(33)** mittels Schweißnaht **(44)** um mehrere Materialstärken des Außenrohrs **(33)** voneinander beabstandet sind.

8. Wechselbar temperierfähiges Behältnis nach Anspruch 3, mit nachfolgenden Materialstärken des von Innenrohr **(15)** und Außenrohr **(33)** gebildeten Hohlkörpers:
- Innenrohr **(15):** 0,3 bis 0,8 mm, vorzugsweise 0,6 mm, mit Ausformungen oder Aushalsungen am Innenrohr **(15)** von einer Stärke von 0,2 bis 0,6 mm, vorzugsweise 0,4 mm, und
- Außenrohr **(33):** 0,6 bis 1,4 mm, vorzugsweise 1,0 mm, mit Ausformungen oder Aushalsungen am Außenrohr **(33)** von einer Stärke von 0,4 bis 1,2 mm, vorzugsweise 0,8 mm.

9. Wechselbar temperierfähiges Behältnis nach Anspnich 3, wobei der verschließende isolierende Rand ein in einer Schale eingebetteter ringförmiger Rand bzw. Isolationsring (**11; 48; 51)** ist, der aus einem isolierenden Schaumstoff besteht, in seinem Inneren hochisolierende Komponenten bzw. Körper **(2; 10; 14)** aufweist und fest über den oberen stirnseitigen Ausformungen oder Aushalsungen und dem oberen stirnseitigen Randbereich von Innenrohr **(15)** und Außenrohr **(33)** überstülpend angeordnet ist

10. Wechselbar temperierfähiges Behältnis nach Anspruch 2 wobei mehrere Behälter **(1)** übereinander gestapelt, einen gemeinsamen Lagerraum **(17)** bildend und durch ein Verbindungselement **(55)** miteinander verbunden angeordnet sind, wobei das Verbindungselement **(55)** in seiner Isolationswirkung konstruktiv wie der ringförmige Rand **(11; 48; 51)** beschaffen ist

11. Wechselbar temperierfähiges Behältnis nach Anspruch 1, wobei randseitig die bombierten Bleche **(6; 6')** etwa rechtwinklig bogenförmig umgebördelt sind und das bombierte Blech **(6)** mit dem Innenrohr **(15)** und das bombierte Blech **(6')** mit dem Außenrohr **(33)** jeweils an Schweißnähten **(44)** verbunden sind, wobei die Bleche **(6; 6')** eine oder mehrere rundumlaufende Sicken **(8)** aufweisen und vorzugsweise am äußeren Blech **(6')** eine Kartusche **(7)** zur Aufbewahrung und Abgabe von Gettermaterial angeordnet ist.

12. Wechselbar temperierfähiges Behältnis nach Anspruch 1 oder 2, wobei die Stützstrukturen **(4)** eine zu Ringen geformte etwa schlauchförmige Gestalt (Torus) aufweisen oder als Vollring ausgebildet oder von zellenförmiger Gestalt sind und den Innenraum **(13)** des Hohlkörpers partiell oder fast vollständig ausfüllend in einer oder mehreren Lagen nebeneinander und/oder übereinander angeordnet sind.

13. Wechselbar temperierfähiges Behältnis nach Anspruch 1 oder 2, wobei die hochisolierenden Komponenten bzw Isolierkörper **(2)** im Wesentlichen von einer ein- oder mehrteiligen harten Kunststoffschale umgeben und in deren Inneren in formstabilem Kunststoffschaum, eingebettet sind und der Isolierkörper **(2)** von flach-zylindrischer Gestalt ist, vorzugsweise in einem Deckel **(12)** und/oder in einem Fußteil **(9)** des Behälters **(1)** angeordnet ist, aus einem zylindrischen Mantel **(5)** besteht, dessen obere und untere Öffnung von bombierten Blechen **(6)** an ihren jeweiligen Rändern an der Schweißnaht **(44)** vakuumdicht mit dem Mantel **(5)** verbunden sind und so einen Hohlkörper bilden, dessen evakuierter Innenraum partiell oder den Innenraum fast vollständig ausfüllend Stützstrukturen **(4)** enthält, um Kräfte von einem Blech **(6)** auf das gegenüberliegende Blech **(6)** zu übertragen.

14. Wechselbar temperierfähiges Behältnis nach Anspruch 1 oder 2,
- wobei die hochisolierenden Komponenten bzw Isolierkörper **(14)** im Wesentlichen von einer ein- oder mehrteiligen harten Kunststoffschale als Deckschicht **(20)** umgeben und in deren Inneren von Laminatschichten **(21)** und/oder formstabilem Kunststoffschaum eingeschlossen sind,
- wobei der Isolierkörper **(14)** ein evakuierter Hohlkörper von scheibenförmiger Gestalt ist, der von einer oder mehreren Lagen metallbedampfter, gas- und wasserdichter Kunststofffolie **(22)** oder Metallfolie umhüllt ist, welche mit einem Harz mit einer oder mehreren Lagen von Glasvlies **(23)** verklebt sind,
- wobei die den Hohlraum umhüllenden Glasvlieslagen **(23)** von einer oder mehreren Lagen Stützstrukturen **(4)** im Inneren des Hohlkörpers gestützt werden und zwischen den Lagen von Stützstrukturen **(4)** wiederum Lagen von Glasvlies **(23)** und metallbedampfter Kunststofffolie **(22)** oder Metallfolie angeordnet sind.

## Claims

1. Exchangeably temperature -controllable container (1), having a storage space (17), having at least one energy store (3), having an outer casing (33) and an inner casing (15), having vacuum insulation, having a cover (12) and a base and foot part (9) protect ing the latter, **characterized in that**
- an upper opening, which is formed by abutting edges, which are hermetically joined at the end sides, of the outer casing (33) and the inner casing (15) running approximately parallel to the latter, outer casing and inner casing forming a hollow body, the end -side edge surfaces of outer casing and/or inner casing being provided, in the vicinity of the hermetic connection, with encircling formations or projections (36) which are designed with at least two degrees of freedom as spring or expansion elements, and the formations or projections (36) thereby form an imaginary encircling annular chamber (49) that takes the shape of a body which results when a plane figure is moved along a continuous curve,
- the upper opening is provided with a closing insulating edge (11; 48; 51) with cover (12) inside it,
- the base comprises at least two preshaped, cambered metal sheets (6, 6') which are designed with at least one degree of freedom as spring or expansion elements and of which the metal sheet (6) is hermetically connected to the inner casing and the metal sheet (6') is hermetically connected to the outer casing, thereby forming a continuous interior space (13) between outer and inner casing and the metal sheets (6, 6'), which interior space includes supporting structures (4) which provide support and have a spacing action at least in the region of the metal sheets (6, 6') and is evacuated up to a high vacuum,
- the foot part is arranged around the outer metal sheet (6') and the lower edge region of the outer casing and comprises a plastic shell with dimensionally stable foamed plastic arranged in the interior,
- the metal sheets (6, 6'), at their connections to the outer casing or the inner casing, and the formations or projections (36) in the upper opening region of the container (1), in the vicinity of the hermetic connection of outer casing and inner casing, have a material thickness which is at least one quarter less than the material thickness of outer casin g and inner casing.

2. Exchangeably temperature -controllable container (1), having a storage space (17), having at least one energy store (3), having an outer casing (33) and an inner casing (15), having vacuum insulation, having a cover (12) and a base a nd foot part (9) protecting the latter, **characterized in that**
- an upper opening and a lower opening are formed by abutting edges, which are hermetically connected at the end sides, of the outer casing (33) and the inner casing (15) running approximately p arallel to the latter, and the hollow body formed in this way is evacuated to a high vacuum, the end -side edge surfaces of outer casing and/or inner casing being provided, in the vicinity of these hermetic connections, with encircling formations or projections (36) which are designed with at least two degrees of freedom as spring or expansion elements, and the formations or projections thereby form an imaginary encircling annular chamber (49) that takes the shape of a body which results when a plane figure is moved along a continuous curve,
- the upper opening is provided with a closing insulating edge (11; 48; 51) with cover (12) inside it,
- the foot part (9) closes off the lower opening of the hollow body, comprises a plastic shell with highly insulating components (2; 10; 14) and insulating foam arranged in the interior and is arranged so as to be fitted securely over the lower end-side formations or projections (36) and the lower end -side edge region of inner casing (15) and outer casing (33),
- highly i nsulating components (2; 10; 14) with supporting structures (4) with a spacing action are arranged in the cover (12), in the foot part (9), in the annularly insulating edge (11; 48; 51) and/or in a connecting part (55) for a plurality of containers (1), an d the interiors of these components are optionally evacuated.

3. Exchangeably temperature -controllable container according to Claim 1 or 2, in which the hollow body is preferably tubular in form and forms a hollow cylinder, the outer casing of which is an outer tube (33) and the inner casing of which is an inner tube (15).

4. Exchangeably temperature -controllable container according to Claim 1 or 2, in which the formations or projections at the end sides of the inner tube (15) and/or the outer tube (33) a re formed as an S -shaped flute (36) or run approximately ih the shape of an arc of a circle with respect to one another and are welded to the seam (44).

5. Exchangeably temperature -controllable container according to Claim 1 or 2, in which the annular cha mber (49) is filled with a thermally insulating, preferably foaming adhesive.

6. Exchangeably temperature -controllable container according to Claim 1 or 2, in which the formations or projections, at their end sides, merge into an elongate limb (42) with 1 ip (43) or a bevel which lengthens the heat path, and the respective ends of the inner tube (15) and the outer tube (33) are connected in a vacuum - tight manner to a weld seam (44).

7. Exchangeably temperature -controllable container according to Claim 3, i n which the formations or projections are spaced apart from one another by several times the thickness of the material of the outer tube (33) by means of a weld seam (44) as far as the connection of inner tube (15) and outer tube (33).

8. Exchangeably tem perature-controllable container according to Claim 3, having the following thicknesses of the material of the hollow body formed from the inner tube (15) and outer tube (33):
- inner tube (15): 0.3 to 0.8 mm, preferably 0.6 mm, with formations or projectio ns on the inner tube (15) with a thickness of from 0.2 to 0.6 mm, preferably 0.4 mm and
- outer tube (33): 0.6 to 1.4 mm, preferably 1.0 mm, with formations or projections on the outer tube (33) with a thickness of from 0.4 to 1.2 mm, preferably 0.8 mm.

9. Exchangeably temperature -controllable container according to Claim 3, in which the closing insulating edge is an annular edge or insulating ring (11; 48; 51) which is embedded in a shell, consists of an insulating foam, has highly insulating components o r bodies (2; 10; 14) in its interior and is arranged such that it is fitted fixedly over the upper end -side formations or projections and the upper end-side edge region of inner tube (15) and outer tube (33).

10. Exchangeably temperature -controllable cont ainer according to Claim 2, with a plurality of containers (1) stacked on top of one another so as to form a common storage space (17), these containers being connected to one another by a connecting element (55), the insulating action of the connecting el ement (55) being provided in design terms in the same way as the annular edge (11; 48; 51).

11. Exchangeably temperature -controllable container according to Claim 1, in which, on the edge side, the cambered metal sheets (6; 6') are flanged over approximately at right angles in the form of an arc, and the cambered metal sheet (6) is connected to the inner tube (15) and the cambered metal sheet (6') to the outer tube (33) in each case at weld seams (44), the metal sheets (6, 6') having one or more encircling beads (8), and a cartridge (7) for holding and releasing getter material preferably being arranged at the outer metal sheet (6').

12. Exchangeably temperature -controllable container according to Claim 1 or 2, in which the supporting structures (4) have a n approximately hose -shaped configuration shaped into rings (a torus configuration) or are formed as a full ring or are of cell -like configuration and are arranged next to one another and/or above one another in one or more layers so as to partially or almost completely fill the interior space (13) of the hollow body.

13. Exchangeably temperature -controllable container according to Claim 1 or 2, in which the highly insulating components or insulating bodies (2) are substantially surrounded by a single -piece or multi -piece hard plastic shell and are embedded in dimensionally stable plastic foam in the interior of this shell, and the insulating body (2) is of flat -cylindrical configuration, is preferably arranged in a cover (12) and/or in a foot part (9) of t he container (1), comprises a cylindrical casing (5), the upper and lower openings of which are connected in a vacuum -tight manner to the casing (5) by cambered metal sheets (6) at the weld seam (44) at their respective edges,
thereby forming a hollow body , the evacuated interior space of which contains supporting structures (4) which partially or almost completely fill the interior space in order for forces to be transmitted from one metal sheet (6) to the opposite metal sheet (6).

14. Exchangeably temper ature-controllable container according to Claim 1 or 2,
- in which the highly insulating components or insulating bodies (14) are substantially surrounded by a single -piece or multi -piece hard plastic shell as covering layer (20) and are enclosed by lamin ate layers (21) and/or dimensionally stable plastic foam in the interior of this plastic shell,
- the insulating body (14) being an evacuated hollow body of disc -like configuration which is encased by one or more layers of metal -coated, gastight and watert ight plastic film (22) or metal foil which are adhesively bonded to one or more layers of glass nonwoven (23) by means of a resin,
- the glass nonwoven layers (23) which encase the cavity being supported by one or more layers of supporting structures (4) i n the interior of the hollow body, and layers of glass nonwoven (23) and metal-coated plastic film (22) or metal foil in turn being arranged between the layers of supporting structures (4).

## Revendications

1. Conteneur (1) à température réglable de manière variable, avec une chambre de stockage (17), avec au moins un accumulateur d'énergie (3), avec une enveloppe extérieure (33) et une enveloppe intérieure (15), avec isolation par le vide, avec un couvercle (12) et un fond et une partie de base (9) protégeant ce dernier, **caractérisé en ce que**
- une ouverture supérieure est formée par des rebords de l'enveloppe extérieure (33) connectés hermétiquement du côté frontal à l'enveloppe intérieure (15) s'étendant approximativement parallèlement à l'enveloppe extérieure, l'enveloppe extérieure et l'enveloppe intérieure formant un corps creux, et, à proximité de la connexion hermétique, les faces de bord du côté frontal de l'enveloppe extérieure et/ou de l'enveloppe int érieure étant pourvues de formations ou de collerettes (36) qui sont réalisées avec au moins deux degrés de liberté sous forme d'éléments élastiques ou extensibles, et les formations ou collerettes (36) formant une chambre annulaire périphérique imaginaire (49) qui a la forme d'un corps obtenu par le déplacement d'une figure plane le long d'une courbe fermée,
- l'ouverture supérieure est pourvue d'un bord isolant de fermeture (11 ; 48 ; 51) avec un couvercle intérieur (12),
- le fond se compose d'au moins deux tôles bombées préformées (6 ; 6'), qui sont réalisées avec au moins un degré de liberté en tant qu'éléments élastiques ou extensibles, dont la tôle (6) est connectée à l'enveloppe intérieure et la tôle (6') est connectée à l'enveloppe supérieure et f orment ainsi un espace interne continu (13) entre l'enveloppe extérieure et l'enveloppe intérieure et les tôles (6 ; 6'), lequel contient au moins dans la région des tôles (6 ; 6') des structures de support (4) assurant un support et un espacement, et est évacué jusqu'à la plage de vide poussé,
- la partie de base est disposée autour de la tôle extérieure (6') et de la partie de bord inférieure de l'enveloppe extérieure et se compose d'une coque en plastique avec un plastique moussé de forme stable prévu à l'intérieur,
- les tôles (6 ; 6'), au niveau de leur connexion à l'enveloppe extérieure, respectivement à l'enveloppe intérieure, et les formations ou les collerettes (36), dans la région d'ouverture supérieure du conteneur (1), à proximité de la connexi on hermétique de l'enveloppe extérieure à l'enveloppe intérieure, présentent une épaisseur de matériau qui est inférieure d'au moins un quart à l'épaisseur de matériau de l'enveloppe extérieure et de l'enveloppe intérieure.

2. Conteneur (1) à température réglable de manière variable, avec une chambre de stockage (17), avec au moins un accumulateur d'énergie (3), avec une enveloppe extérieure (33) et une enveloppe intérieure (15), avec isolation par le vide, avec un couvercle (12) et un fond et une partie d e base (9) protégeant ce dernier, **caractérisé en ce que**
- une ouverture supérieure et une ouverture inférieure sont formées par des rebords de l'enveloppe extérieure (33) et de l'enveloppe intérieure (15) s'étendant approximativement parallèlement à cell e-ci, connectés hermétiquement du côté frontal, et le corps creux ainsi formé est évacué jusqu'à la plage de vide poussé, et, à proximité des ces connexions hermétiques, les faces de bord du côté frontal de l'enveloppe extérieure et/ou de l'enveloppe inté rieure étant pourvues de formations ou de collerettes (36) qui sont réalisées avec au moins deux degrés de liberté sous forme d'éléments élastiques ou extensibles, et les formations ou collerettes formant une chambre annulaire périphérique imaginaire (49) qui a la forme d'un corps obtenu par le déplacement d'une figure plane le long d'une courbe fermée,
- l'ouverture supérieure est pourvue d'un bord isolant de fermeture (11 ; 48 ; 51) avec un couvercle intérieur (12),
- la partie de base (9) ferme l'ouver ture inférieure du corps creux, se compose d'une coque en plastique avec de la mousse isolante disposée à l'intérieure et des composants hautement isolants (2 ; 10 ; 14) et est disposée fixement par recouvrement par -dessus les formations ou collerettes (36 ) inférieures du côté frontal et la partie de bord inférieure du côté frontal de l'enveloppe intérieure (15) et de l'enveloppe extérieure (33),
- des composants hautement isolants (2 ; 10 ; 14) avec des structures de support et d'espacement (4) sont disposés dans le couvercle (12), dans la partie de base (9), dans le bord isolant annulaire (11 ; 48 ; 51) et/ou dans une partie de connexion (55) pour plusieurs conteneurs (1), et leurs espaces internes sont évacués de manière sélective.

3. Conteneur à tempér ature réglable de manière variable selon la revendication 1 ou 2, dans lequel le corps creux a de préférence une forme tubulaire et forme un cylindre creux dont l'enveloppe extérieure est un tube extérieur (33) et dont l'enveloppe intérieure est un tube intérieur (15).

4. Conteneur à température réglable de manière variable selon la revendication 1 ou 2, dans lequel les formations ou collerettes sont réalisées sur les côtés frontaux du tube intérieur (15) et/ou du tube extérieur (33) sous forme de cannelures en forme de S (36) ou s'étendent approximativement en forme d'arc de cercle les unes par rapport aux autres et sont soudées au niveau du joint de soudure (44).

5. Conteneur à température réglable de manière variable selon la revendication 1 ou 2, dans lequel la chambre annulaire (49) est remplie d'une colle thermiquement isolante, de préférence moussante.

6. Conteneur à température réglable de manière variable selon la revendication 1 ou 2, dans lequel les formations ou les collerettes se prolongent au niveau de leurs côtés frontaux par une branche longitudinale (42) avec une lèvre (43) ou un biseau prolongeant la trajectoire de la chaleur, et les extrémités respectives du tube intérieur (15) et du tube extérieur (33) sont connectées de manière étanche au vide par un joint de soudure (44).

7. Conteneur à température réglable de manière variable selon la revendication 3, dans lequel les formations ou les collerettes sont espacées l'une de l'autre de plusieurs épaisseurs de matériau du tube extérieur (33) jusqu'à la connexion du tube intérieur (15) et du tube extérieur (33) au moyen du joint de soudure (44).

8. Conteneur à température réglable de manière variable selon la revendication 3, ayant les épaisseurs de matériau suivantes du corps creux formé par le tube intérieur (15) et le tube extérieur (33) :
- tube intérieur (15) : 0,3 à 0,8 mm, de préférence 0,6 mm, avec les formations ou les collerettes sur le tube intérieur (15) ayant une épaisseur de 0,2 à 0,6 mm, de préférence de 0,4 mm, et
- tube exté rieur (33) : 0,6 à 1,4 mm, de préférence 1,0 mm, avec les formations ou les collerettes sur le tube extérieur (33) ayant une épaisseur de 0,4 à 1,2 mm, de préférence de 0,8 mm.

9. Conteneur à température réglable de manière variable selon la revendication 3, dans lequel le bord isolant de fermeture est un bord annulaire ou une bague d'isolation (11 ; 48 ; 51) noyé(e) dans une coque, qui se compose d'une mousse isolante, présente dans son intérieur des composants ou des corps hautement isolants (2 ; 10 ; 14 ) et est disposé fixement par recouvrement par -dessus les formations ou collerettes supérieures du côté frontal et la partie de bord supérieure du côté frontal du tube intérieur (15) et du tube extérieur (33).

10. Conteneur à température réglable de maniè re variable selon la revendication 2, dans lequel plusieurs conteneurs (1) sont empilés les uns au - dessus des autres, en formant une chambre de stockage commune (17) et sont disposés de manière connectée les uns aux autres par un élément de connexion (55), l'élément de connexion (55) étant construit comme le bord annulaire (11 ; 48 ; 51) en ce qui concerne son effet d'isolation.

11. Conteneur à température réglable de manière variable selon la revendication 1, dans lequel les tôles bombées (6 ; 6') sont bo rdées à angle droit au niveau du bord en forme d'arc et la tôle bombée (6) est connectée au tube intérieur (15) et la tôle bombée (6') est connectée au tube extérieur (33) à chaque fois au niveau de joints de soudure (44), les tôles (6 ; 6') présentant une ou plusieurs moulures périphériques (8) et de préférence une cartouche (7) pour la conservation et la distribution de matériau de dégazage étant disposée sur la tôle extérieure (6').

12. Conteneur à température réglable de manière variable selon la reven dication 1 ou 2, dans lequel les structures de support (4) présentent une forme tubulaire approximativement annulaire (tore) ou sont réalisées sous forme de bague complète ou ont une forme cellulaire et sont disposées les unes à côté des autres et/ou les unes sur les autres en une ou plusieurs couches en remplissant partiellement ou presque complètement l'espace interne (13) du corps creux.

13. Conteneur à température réglable de manière variable selon la revendication 1 ou 2, dans lequel les composants ha utement isolants, respectivement les corps isolants (2) sont essentiellement entourés par une coque en plastique en une ou plusieurs parties et sont noyés dans son intérieur dans une mousse plastique de forme stable, et le corps isolant (2) a une forme cylindrique plane, de préférence est disposé dans un couvercle (12) et/ou dans une partie de base (9) du conteneur (1), se compose d'une enveloppe cylindrique (5) dont l'ouverture supérieure et l'ouverture inférieure de tôles bombées (6) sont connectées de ma nière étanche au vide à l'enveloppe (5) au niveau de leurs bords respectifs au joint de soudure (44) et forment ainsi un corps creux, dont l'espace interne évacué contient des structures de support (4) remplissant partiellement ou presque complètement l'es pace interne, afin de transférer les forces d'une tôle (6) à la tôle opposée (6).

14. Conteneur à température réglable de manière variable selon la revendication 1 ou 2, dans lequel
- les composants hautement isolants ou les corps isolants (14) sont essentiellement entourés par une coque en plastique dur en une ou plusieurs parties servant de couche de recouvrement (20) et sont enfermés à l'intérieur de couches stratifiées (21) et/ou de mousse de plastique de forme stable,
- le corps isolant (14) est un corps creux évacué en forme de disque, qui est enveloppé par une ou plusieurs couches de feuille de plastique (22) métallisée par condensation de vapeur, étanche au gaz et à l'eau, ou de feuille de métal, qui sont collées au moyen d'une résine à une ou pl usieurs couches de mat de fibres de verre (23),
- les couches de mat de fibres de verre (23) enveloppant l'espace creux sont supportées par une ou plusieurs couches de structures de support (4) à l'intérieur du corps creux et entre les couches de structur es de support (4) sont à nouveau disposées des couches de mat de fibres de verre (23) et de feuille de plastique métallisée par condensation de vapeur (22) ou de feuille métallique.
